# EUROPEAN PATENT SPECIFICATION

(11) **EP 3 574 149 B1**
(45) Date of publication and mention of the grant of the patent: **14.10.2020**
(21) Application number: 18702358.5
(22) Date of filing: 18.01.2018
(51) Int. Cl.: E02B 17/00, B66C 1/42, F03D 13/25, E02D 27/52, E02D 27/42, B66C 1/10, F03D 13/20

(54) **A METHOD AND TOOL FOR INSTALLATION OF AN OFFSHORE WIND TURBINE**
VERFAHREN UND WERKZEUG ZUR INSTALLATION EINER OFFSHORE-WINDTURBINE
PROCÉDÉ ET OUTIL POUR L'INSTALLATION D'UNE ÉOLIENNE EN MER

(30) Priority: 25.01.2017 NL 2018231; 17.03.2017 NL 2018540
(43) Date of publication of application: 04.12.2019
(73) Proprietor: Itrec B.V., 3115 HH Schiedam (NL)
(72) Inventor: VAN RUYVEN, Stefan Cornelis, 3115 HH Schiedam (NL); HOOFTMAN, Maarten Hugo, 3115 HH Schiedam (NL); VEHMEIJER, Terence Willem August, 3115 HH Schiedam (NL); ROODENBURG, Joop, 3115 HH Schiedam (NL)
(74) Representative: EP&C
(86) International application number: PCT/NL2018/050036
(87) International publication number: WO 2018/139918

(56) References cited:
- DE-U1-202009 006 507

## Description

The invention relates to a method and a tool for the installation of a foundation of an offshore wind turbine, said foundation comprising a monopile that is driven into the seabed by means of a pile driving device. The foundation may also comprise a transition piece that is to be mounted on top of the monopile that has been driven into the seabed.

In a known method for installing an offshore wind turbine having this type of foundation, after the components are transported to the installation site on one or more vessels, the foundation is installed first. By means of a heavy lift crane and an upending and lifting tool suspended from a hook of a lifting block of the crane the monopile is upended, placed overboard and lowered onto the seabed. The upending and lifting tool is used to retain the upper end of the monopile during this process. It is common to make use of a pile holder, or pile gripper as called in the field, in order to keep the monopile in vertical orientation when standing on the seabed, e.g. to ensure that the monopile is driven vertically into the seabed during the later pile driving process.

After disconnecting the tool from the monopile, it is subsequently placed onto the deck of the vessel where it is disconnected from the hook. Then the pile driving device is connected to the hook, commonly by slings, and is lifted above the monopile and positioned onto the upper end of the monopile that has just been placed onto the seabed.

Thereafter the monopile is driven into the seabed by means of the pile driving device. The pile driving device may be of any type suitable to drive a monopile into the seabed, e.g. comprising a reciprocating hammer device, a vibratory pile driving device, or a water filled tank wherein a fuel air mixture is ignited in a lower portion of the tank to lift the water mass which subsequently drops down again so as to cause the desired impact.

In embodiments, once the monopile has been driven into the seabed, the pile driving device is lifted from the monopile and the installation is continued with steps associated with the mounting of a transition piece onto the monopile. In known embodiments this involves placing the pile driving device on the vessel and releasing it from the crane hook. Then a dedicated transition piece lifting tool is attached to the crane hook. This is followed by connecting said transition piece lifting tool to a transition piece, e.g. known transition piece lifting tools comprising one or more mobile latching members that are adapted to latch onto the transition piece, e.g. to latch underneath a flange, e.g. a radially inward flange, at an upper end of the transition piece. The transition piece is then lifted by means of the crane and placed on the top of the monopile.

In common embodiments, e.g. also envisaged in the context of the present invention in embodiments thereof, the flange of the transition piece is provided with bolt holes and/or bolts that are adapted to connect a mast of the wind turbine onto the transition piece. In absence of a transition piece the monopile itself may have a flange for bolting thereto a mast of the wind turbine.

As known in the art, once the monopile type foundation is installed, the wind turbine can be installed thereon at once as a whole or by assembling the wind turbine in parts on the monopile foundation.

DE202009006507 discloses a prior art tool for upending a foundation of an offshore wind turbine and guiding it towards the seabed.

There is a trend towards large wind turbines, e.g. of at least 4 MW, and a desire to install offshore wind turbines at locations with rather significant water depths. Both result in larger and heavier monopile foundations. Hence, it is expected that in the near future monopiles need to be installed that are longer than 100 meters, possibly 120 meters or larger. Diameters of the monopile be for example in the range between 6 and 10 meters. The material for the monopile is commonly steel and wall thickness may, e.g., be in the range between 10 and 20 centimetres. The weight of such monopiles may be larger than 1000mt, possibly 1300mt or above. Whilst monopile foundations are nowadays seen as efficient, the enormous dimensions and weight pose increasingly high requirements to the cranes and tools used, and increases the complexity and duration of the operation of thereof in the installation process.

It is therefore an object of the invention to provide an improved method and tool to install a monopile type foundation of an offshore wind turbine.

According to a first aspect of the invention this object is achieved by providing a method according to claim 1.

The method of claim 1 forms an improvement of prior art methods, in particular as - once the monopile has been lowered onto the seabed - there is no removal of the upending and lifting tool from the crane prior to pick up of the pile driving device. This step of removal of the upending and lifting tool may, given the size and weight of the tool, take up between 30 minutes and an hour or even more and is now avoided.

This seemingly short time may represents an enormous cost factor due to the fact that, in order to be able to perform the rather complicated and time consuming installation steps, the prevailing wind speed and/or sea state commonly has to be within a predetermined range during a certain period of time. The length of this time period depends on both the expected duration of the total installation process, and a safety factor to be taken into account. In practice, a project involves the installation of a series of foundations, and such a project may then run into an adverse weather situation requiring the halting of the installation process. This may mean that personnel and maintenance equipment, including e.g. expensive cranes and barges, may be in stand-by during days or even weeks in order to finally complete such a project.

Therefore the method of the claim 1 is advantageous for installation of individual wind turbines, and particularly advantageous for the installation of wind turbine parks. This involves the installation of multiple wind turbines in succession, which in total requires more time of suitable weather conditions. Time savings on the individual installation of turbines are expected to lead to significant time savings on completion of the total installation of the wind park, since the occurrence of time windows wherein suitable weather conditions occur may be multiple days or even weeks apart.

In an embodiment, in step b) the upending and lifting tool is connected to the upper end portion of the tubular monopile body by means of the mobile friction clamp members , and not by the mobile latching members, when present,
said mobile friction clamp members frictionally engaging an inner surface and/or an outer surface of the tubular monopile body,
and wherein said mobile latching members, when present, in the retracted position thereof in a top view of said upending and lifting tool radially extend within the outer contour of the mobile friction clamp members,
and wherein at least during steps b), c), d) and e) said mobile latching members, when present, remain in their retracted position.

In another embodiment the upper end portion of the tubular monopile body is provided with said radially inward flange, and wherein in step b) the upending and lifting tool is connected to the upper end portion of the tubular monopile body by means of the mobile latching members, and not by the mobile friction clamp members, when present,
said mobile latching members latching underneath the radially inward flange of the tubular monopile body,
and wherein at least during steps b), c), d) and e) said mobile friction clamp members, when present, remain in their retracted position.

In an embodiment 4 - in the step after step e) and prior to step f) of connecting the upending and lifting tool still attached to the lifting block of the crane to the pile driving device - said connecting is done by means of either the mobile friction clamp members or the mobile latching members of the upending and lifting tool used for handling the monopile,
and wherein during step g) the pile driving device is retained by means of either the mobile friction clamp members or the mobile latching members of the upending and lifting tool used for handling the monopile.

In an embodiment the frame of the upending and lifting tool further comprises one or more pile driving device connectors in addition to and distinct from each of said at least one of mobile friction clamp members and mobile latching members,
and - in the step of connecting the upending and lifting tool still suspended from the lifting block of the crane to the pile driving device - said connecting is done by means of one or more of the additional pile driving device connectors.

In an embodiment said one or more additional pile driving device connectors are embodied as one or more mobile pile driving device latching members, and - in the step of connecting the upending and lifting tool still suspended from the lifting block of the crane to the pile driving device - said connecting comprises latching of said pile driving device connectors onto the pile driving device, e.g. underneath one or more protrusions and/or a flange at an upper end of the pile driving device.

In an embodiment a diameter of the upper end of the pile driving device is substantially smaller than a diameter of the upper end portion of the tubular monopile body of the monopile, e.g. at least two times smaller. This e.g. applies to known hammering ram devices which have a slender hammer body, e.g. with a diameter between 0.50 and 1.50 meter.

In an embodiment use is made of a pile driving device that is at an upper end thereof provided with a lifting interface structure that is adapted to the upending and lifting tool that is used for handling the monopile, e.g. said lifting interface structure mimicking the upper end portion of the monopile and/or the transition piece. In embodiments - in the step of connecting the upending and lifting tool still suspended from the lifting block of the crane to the pile driving device - said at least one of the mobile friction clamp members and the latching members of the upending and lifting tool is engaged with the lifting interface structure of the pile driving device.

It is preferred for the mobile friction members to be embodied as wedge members. For example a multitude of wedge members are distributed around the circumference of the frame.

In an embodiment at least during steps b), c), and d) said mobile friction clamp members do not vertically support the radially inward flange of the tubular monopile body, when present.

In an embodiment that provides even further enhanced versatility of the upending and lifting tool, this tool also comprises two pivotal spreader bar members, e.g. which are at a radially proximal end thereof pivotally connected to the frame or the attachment member.

In an embodiment the attachment member is pivotally connected to the frame of the tool, e.g. the attachment member being embodied as an arm or a shackle.

In an embodiment one or more spreader bar actuators are provided, which are at least adapted to move the two pivotal spreader bar members from the retracted position thereof into the extended position,

In an embodiment the pivotal spreader bar members each at a radially remote end thereof are provided with a spreader bar connector, wherein each spreader bar connector in the extended position of the pivotal spreader bar members in a top view of said upending and lifting tool is in a radial position outside the outer contour of the one or more mobile friction clamp members and outside the outer contour of the one or more mobile latching members when present,

The invention also envisages a method further comprising suspending one or more objects from said pivotal spreader bar members by means of the spreader bar connectors thereof, e.g. via one or more slings connected to the spreader bar connectors, e.g. furthermore via a lifting block, each of said pivotal spreader bar members being in the extended position.

In an embodiment, prior to step c), further comprises the step of positioning the monopile in a monopile holder on an installation vessel while being in a horizontal orientation, e.g. parallel to a longitudinal axis of the installation vessel,
wherein said monopile holder engages with a circumference of the monopile at a lower side thereof to hold the monopile in order to limit movement of the lower side of the monopile in a direction perpendicular to a longitudinal axis of the monopile,
and wherein the monopile holder engages with a lower end of the monopile in order to limit movement of the monopile in a direction parallel to the longitudinal axis of the monopile,
and after step c) and prior to step d) further comprises the step of disengaging the monopile holder from the lower end of the monopile.

The invention also envisages a method wherein a transition piece is installed onto the monopile that has been driven into the seabed, and wherein the method comprises after step
h) the following steps:
i) removing the pile driving device from upper end portion of the monopile by means of the crane and the upending and lifting tool,
j) releasing the pile driving device from the upending and lifting tool,
k) connecting the upending and lifting tool still suspended from the lifting block of the crane to the transition piece, e.g. wherein the transition piece is provided at an upper end portion thereof with a radially inward flange and wherein the upending and lifting tool is provided with said mobile latching members and wherein the mobile latching members are moved into said latching position,
l) lifting said transition piece by means of the crane and the upending and lifting tool,
m) positioning said suspended transition piece onto the upper end portion of the tubular monopile body of the monopile by means of said crane and the upending and lifting tool.

In an embodiment in step k) the upending and lifting tool connected to the upper end portion of the transition piece by means of the mobile friction clamp members, and not by the mobile latching members, when present,
said mobile friction clamp members frictionally engaging an inner surface and/or an outer surface of the transition piece,
and wherein said mobile latching members, when present, in the retracted position thereof in a top view of said upending and lifting tool radially extend within the outer contour of the mobile friction clamp members.

In an embodiment the upper end portion of the transition piece is provided with a radially inward flange), and in step k) the upending and lifting tool is connected to the upper end portion of the transition piece by means of the mobile latching members, and not by the mobile friction clamp members when present,
said mobile latching members latching underneath the radially inward flange of the transition piece.

In an embodiment, at least during step k) said mobile friction clamp members do not vertically support the radially inward flange of the transition piece, when present.

According to a second aspect thereof the invention provides a tool for use in a method for installation of a monopile foundation of an offshore wind turbine.

The second aspect of the invention provides a dual mode tool for installation of a foundation of an offshore wind turbine according to claim 17. Herein the rigid frame is also provided with mobile latching members adapted to latch onto the upper end portion of the tubular monopile body and/or onto the upper end portion of the transition piece and/or onto a pile driving device, e.g. to latch underneath a radially inward flange when present, as well as one or more latching members actuators adapted to move the mobile latching members between a retracted position, e.g. wherein the mobile latching members can pass through an opening defined by the radially inward flange when present, and a latch position, e.g. wherein the mobile latching members are underneath the radially inward flange,
and the mobile wedge members are operable independently from the mobile latching members so to connect to a monopile, a pile driving device, and/or a transition piece by means of either said mobile wedge members or said mobile latching members.

This upending and lifting tool constitutes a preferred embodiment of a tool to be employed in the first aspect of the invention.

In an embodiment the rigid frame of the tool further comprises one or more pile driving device connectors in addition to and distinct from said mobile wedge members and mobile latching members adapted to latch on one or more of the upper end portion of the tubular monopile body and/or onto the upper end portion of the transition piece.

In an embodiment the one or more additional pile driving device connectors are adapted to connect the upending and lifting tool to the upper end of the pile driving device (5), said upper end of the pile driving device having a diameter which is substantially smaller than a diameter of the upper end portion of the tubular monopile body of the monopile and/or of the transition piece.

In an embodiment said mobile friction clamp members in the retracted position thereof in a top view of said upending and lifting tool radially extend within the outer contour of the mobile latching members.

In an embodiment the rigid frame is provided with two diametrically opposite pivotal spreader bar members,
said pivotal spreader bar members at a radially proximal end thereof being pivotally connected to the rigid frame as well as two spreader bar actuators that are at least adapted to move the two pivotal spreader bar members from the retracted position thereof into the extended position,
said pivotal spreader bar members each at a radially remote end thereof being provided with a spreader bar connector,
wherein each spreader bar connector in the extended position of the pivotal spreader bar members in a top view of said upending and lifting tool is in a radial position outside the outer contour of the one or more mobile friction clamp members and/or the outer contour of the one or more mobile latching members.

In an embodiment the pivotal spreader bar members are at a radially proximal end thereof being pivotally connected to the attachment member.

The invention is further explained in relation to the attached drawings, in which:
- Fig. 1: illustrates rotating a monopile during step d) of the method, by means of a crane and the upending and lifting tool;
- Figs. 2A-G: show various detailed 3D views of the design of a possible embodiment of the tool in various views, its parts in different positions;
- Figs. 2H-M: show front views of an embodiment of the tool;
- Figs. 2N-R: show side views of an embodiment of the tool;
- Figs. 2S-W: show top views of the preferred embodiment of the tool;
- Figs. 3A-C: show stages of a method prior to and during latching onto a monopile;
- Figs. 3D-F: show stages of a method prior to and during latching onto a transition piece.

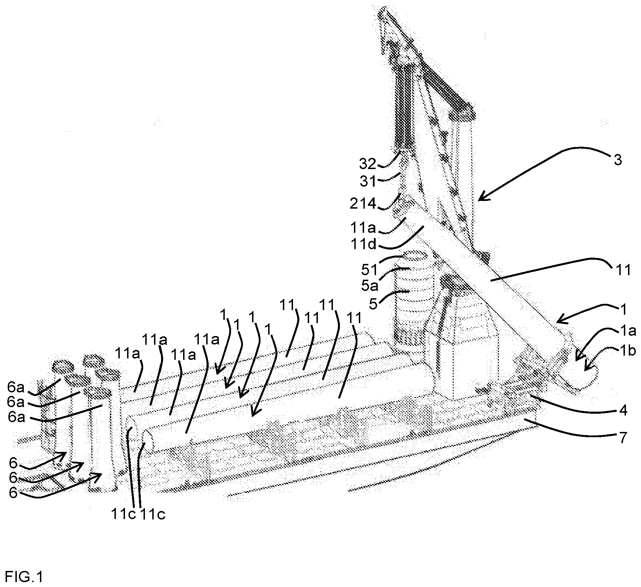

Fig.1 illustrates a foundation for an offshore wind turbine being installed according to the method of the invention. This foundation comprises a monopile 1 that is driven into the seabed. Optionally, the foundation also comprises a transition piece 6 to be mounted on the monopile 1 after said monopile 1 has been driven into the seabed.

Fig.1 illustrates a monopile 1 after it has been transported in a horizontal orientation to an offshore installation site. This monopile 1 has a tubular monopile body 11 with an upper end portion 11a, that is optionally provided with a radially inward flange 11b.

As shown in Fig.1, an upending and lifting tool 2 according to the second aspect of the invention has been connected to the upper end portion 11a of the tubular monopile body 11 of the monopile 1 after the transportation to the offshore installation site. During this connecting the monopile 1 was still in horizontal orientation.

The upending and lifting tool 2 that has been connected comprises firstly a rigid frame 21. This rigid frame 21 is provided with an attachment member 214, which is attaching, or adapted to attach, the upending and lifting tool 2 to a lifting block 31 of a crane 3. Fig.1 shows the attachment member being attached to the lifting block 31 of a crane 3, namely, in this example via one or more slings 32 to a crane hook of the lifting block 31.

Fig.1 illustrates the upper end portion 11a of the tubular monopile body 11 being lifted by means of upending and lifting tool 2 and crane 3. Thereby the monopile 1 is rotated from a horizontal orientation into a vertical orientation.

After being rotated into a vertical orientation, or in a final stage thereof, ultimately the monopile 1 is lowered into the water and placed on the seabed by means of the crane 3. During this last step the monopile is preferably retained in vertical orientation by means of a monopile holder 4. A monopile holder suitable for this purpose is shown in Fig.1 as well.

The upending and lifting tool 2 is subsequently released from the upper end portion 11a of the tubular monopile body 11 of the monopile 1, where after a pile driving device 5, which is as shown in Fig.1 for instance standing on the deck of a vessel 7, is suspended from the lifting block 31 of the crane 3. The suspended pile driving device 5 is then positioned onto the upper end portion 11a of the tubular monopile body 11 of the monopile 1 by means of the crane 3. The pile driving device 5 is subsequently operated, whereby the monopile 1 is driven into the seabed.

The method firstly comprises in between releasing the upending and lifting tool 2 from the upper end portion 11a of the tubular monopile body 11 of the monopile 1 and suspending a pile driving device 5 from the lifting block 31 of the crane 3, connecting the upending and lifting tool 2, which is at that point still attached to the lifting block 31 of the crane 3, to the pile driving device 5.

The method secondly comprises the pile driving device 5 being retained by the upending and lifting tool 2 and said suspended pile driving device 5 being positioned onto the upper end portion 11a of the tubular monopile body 11 of the monopile 1 by means of said crane 3.

The method thirdly comprises, optionally, after positioning said suspended pile driving device 5 onto the upper end portion 11a of the tubular monopile body 11 of the monopile 1 by means of said crane 3 and prior to operating the pile driving device 5 and thereby driving the monopile 1 into the seabed, the upending and lifting tool 2 being released from the pile driving device 5 that has been positioned on the monopile 1.

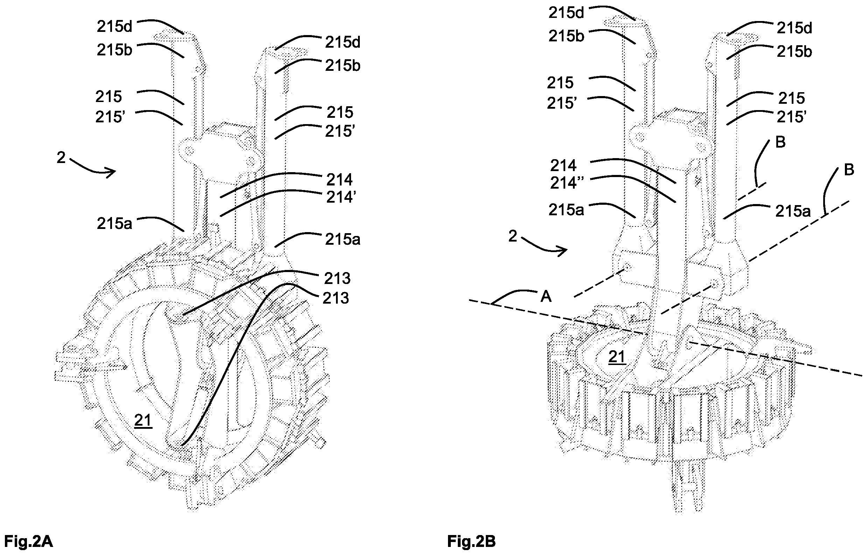

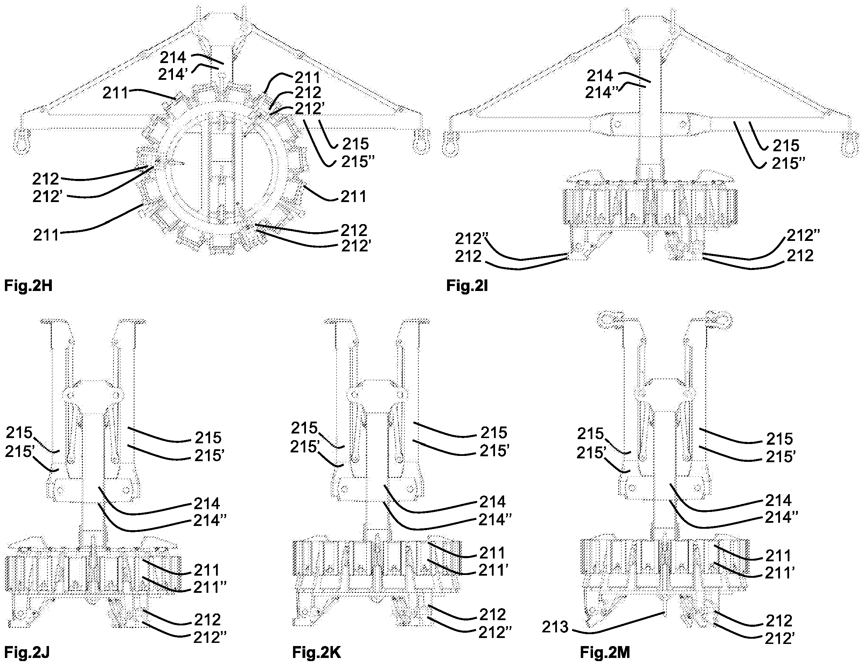

Figs.2A-W show detailed views of a preferred embodiment of the upending and lifting tool 2. Therein, the attachment member 214 being provided on the rigid frame 21, is able to be pivoted around a horizontal axis A into a retracted position 214', shown in Fig.2A, as well as into an extended position 214", as shown in Fig.2B.

It is illustrated that the attachment member 214 is adapted to attach the upending and lifting tool 2 to a lifting block 31 of a crane 3 by comprising attachment member connectors 214d having openings. The attachment member connectors may also comprise other attachment means, e.g. hooks, chains or shackles, e.g. bow shackles.

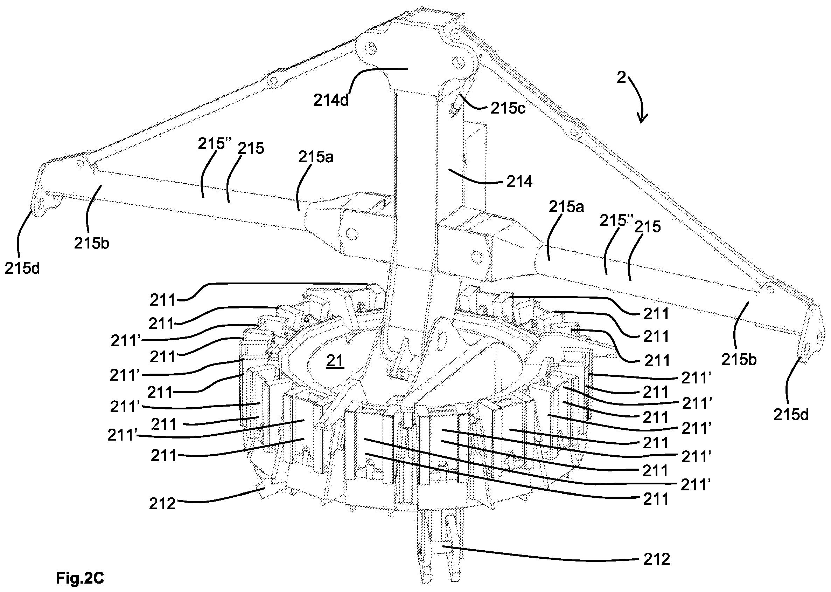

Figs.2A and 2B illustrate as well that the upending and lifting tool 2 may comprise two pivotal spreader bar members 215, which are at a radially proximal end 215a thereof pivotally connected to the frame 21 or the attachment member 214. Therein the pivotal spreader bar members 215 are each at a radially remote end 215b thereof provided with a spreader bar connector 215d. Furthermore, they are movable into a retracted position 215', shown in Figs.2A and 2B, as well as into an extended position 215", shown in Fig.2C.

Preferably, as shown in Fig.2C, in this possible embodiment of the upending and lifting tool 2 the upending and lifting tool 2 comprises one or more spreader bar actuators 215c as well, which are at least adapted to move the two pivotal spreader bar members 215 into the retracted position 215' thereof, and into the extended position 215" thereof.

The rigid frame 21 of the upending and lifting tool 2 is further provided with one or more mobile friction clamp members 211 as well as one or more clamping actuators 211a, or comprises one or more mobile latching members 212 as well as one or more latching members actuators 212a, or comprises all of these elements - that is, one or more mobile friction clamp members 211, one or more clamping actuators 211a, one or more mobile latching members 212, and one or more latching members actuators 212a. In the embodiment shown in Fig.2C, all of these elements are provided on the rigid frame 21.

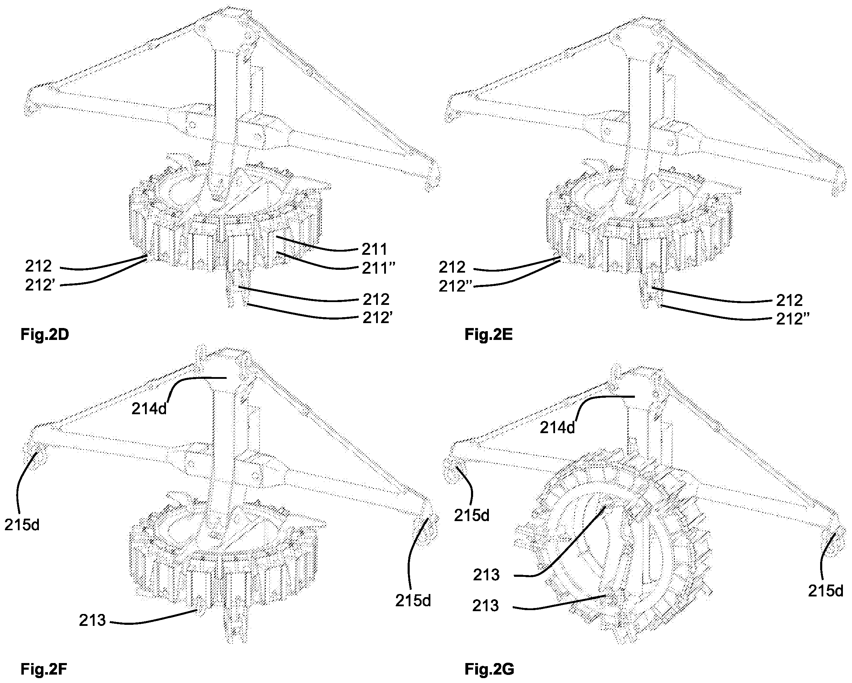

The clamping actuators 211a are at least adapted to move the mobile friction clamp members 211 into a retracted position 211', shown in Fig.2C, and into a clamping position 211", shown in Fig.2D.

The latching members actuators 212a are adapted to move the mobile latching members 212 between a retracted position 212', shown in Fig.2D, and into a latch position 212", shown in Fig.2E.

As shown in Fig.2F and Fig.2G, but in Fig.2A as well, the rigid frame 21 of the upending and lifting tool 2 in this embodiment further comprises one or more additional pile driving device connectors 213 in addition to, and distinct from, each of the at least one of mobile friction clamp members 211 and mobile latching members 212. It is envisaged that these one or more pile driving device connectors 213 specifically connect a pile driving device 5 to the upending and lifting tool 2.

In the shown embodiment, the pile driving device connectors 213 are embodied as portions of the rigid frame provided with openings, as is visible in Fig.2A, through which for instance bow shackles may be mounted, as shown in Fig.2F and 2G. However, though the additional pile driving device connectors 213 may alternatively just as well comprise other connecting means, e.g. latching elements, e.g. hooks, chains, slings or other types of openings, shackles or pivoting elements.

Particularly, given that a diameter of the upper end 5a of the pile driving device 5 may be substantially smaller than a diameter of the upper end portion 11a of the tubular monopile body 11 of the monopile 1, and the additional pile driving device connectors 213 being envisaged specifically to connect a pile driving device 5 to the upending and lifting tool 2, these can be provided at a smaller diameter on the upending and lifting tool 2 than the mobile friction clamp members 211 and/or the mobile latching members 212 that are to be connected to the monopile 1. In this way, the pile driving device connectors 213 can for example be provided correspondingly to a diameter that is specific to the upper end 5a of the pile driving device 5 .

The diameter of the upper end 5a of the pile driving device 5 may for example be at least two times smaller than a diameter of the upper end portion 11a of the tubular monopile body 11 of the monopile 1, so that the pile driving device connectors 213 may be provided to correspond to a diameter twice as small as the diameter to which the mobile friction clamp members 211 and/or the mobile latching members 212 correspond.

In other situations, it is envisaged that the mobile friction clamp members 211 and/or the mobile friction members 212 are used to connect the pile driving device 5 to the upending and lifting tool 2.

In an example, the one or more additional pile driving device connectors 213 may be embodied specifically as one or more additional mobile pile driving device latching members. These may be adapted to latch underneath, around, inside, etc, one or more protrusions e.g a flange, and/or one or more depressions, e.g. openings, at an upper end 5a of the pile driving device 5.

Figures 2H-2M provide front views of the preferred embodiment of the upending and lifting tool 2 according to the invention. Therein, different combinations of positions of the attachment member 214, the pivotal spreader bar members 215, the mobile friction clamp members 211 and the mobile latching members 212 are shown.

In Fig.2H the attachment member 214 is the retracted position 214' thereof, the pivotal spreader bar members 215 are in the extended position thereof 215" and the mobile latching members 212 are in the retracted position 212' thereof.

It can be verified from this figure that as is preferred, in this embodiment the mobile latching members 212 are provided such to, in their retracted position 212', extend in a radial direction within the outer contour of the mobile friction clamp members 211.

Furthermore, it can be verified from this figure that as is preferred, in this embodiment each spreader bar connector 215d in the extended position 215" of the spreader bar members 215 in a top view of said upending and lifting tool 2 is in a radial position outside the outer contour of the one or more mobile friction clamp members 211. Furthermore, each of these is outside the outer contour of the one or more mobile latching members 212.

In Fig.2I the attachment member 214 is the extended position 214" thereof, the pivotal spreader bar members 215 are in the extended position 215" thereof, the mobile friction clamp members 211 are in the clamping position 211" thereof, and the mobile latching members 212 are in the latching position 212" thereof.

In Figs.2J-2M the attachment member 214 is the extended position 214" thereof and the pivotal spreader bar members 215 are in the extended position 215" thereof. In Fig.2J, the mobile friction clamp members 211 are in the clamping position 211" thereof, and the mobile latching members 212 are in the latching position 212" thereof. In Fig.2K, the mobile friction clamp members 211 are in the retracted position 211' thereof, and the mobile latching members 212 are in the latching position 212" thereof.

In Fig.2M, the mobile friction clamp members 211 are in the retracted position 211' thereof, and the mobile latching members 212 are in the retracted position 212' thereof. It can be verified from this figure as well that as is preferred, in this embodiment the mobile latching members 212 are provided such to, in their retracted position 212', extend in a radial direction within the outer contour of the mobile friction clamp members 211 - even when the latter are in the retracted position 211' thereof.

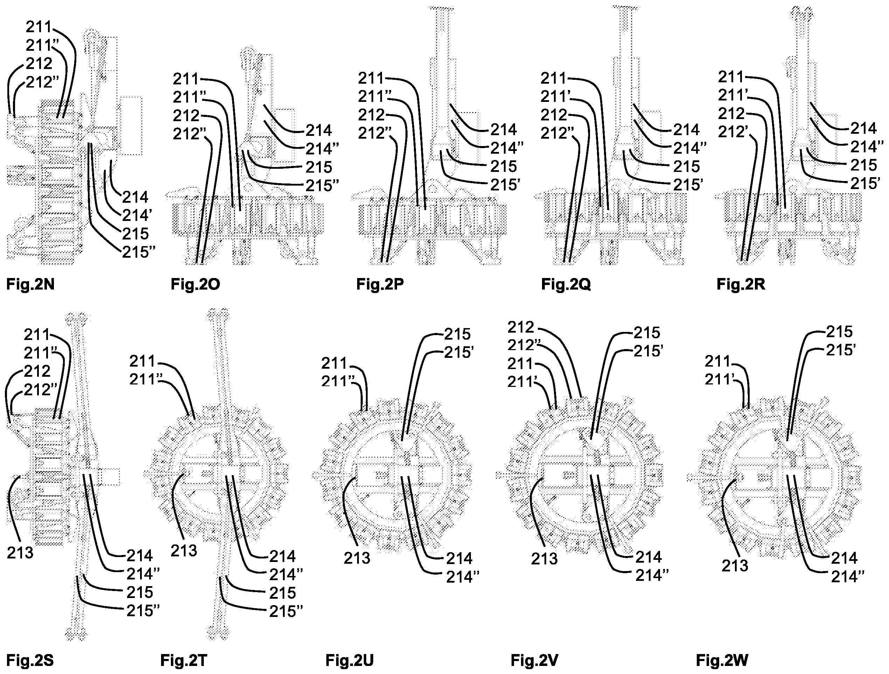

Figures 2N-2R provide side views of the preferred embodiment of the upending and lifting tool 2 according to the invention. Therein, different combinations of positions of the attachment member 214, the pivotal spreader bar members 215, the mobile friction clamp members 211 and the mobile latching members 212 are shown.

In Fig.2N the attachment member 214 is the retracted position 214' thereof. In Figs.2O-2R it is in the extended position 214" thereof. In Fig.2N-2O the pivotal spreader bar members 215 are in the extended position 215" thereof. In Figs.2P-2R these are in the retracted position 215' thereof. In Fig.2N-2P the mobile friction clamp members 211 are in the clamping position 211" thereof. In Figs.2Q-2R these are in the retracted position 211' thereof. In Fig.2N-2Q the mobile latching members 212 are in the latching position 212" thereof. In Fig.2R these are in the retracted position 212' thereof.

Figures 2S-2W provide top views of the preferred embodiment of the upending and lifting tool 2 according to the invention. Therein, different combinations of positions of the attachment member 214, the pivotal spreader bar members 215, the mobile friction clamp members 211 and the mobile latching members 212 are shown.

In Fig.2S the attachment member 214 is the retracted position 214' thereof. In Figs.2T-2W it is in the extended position 214" thereof. In Fig.2S-2T the pivotal spreader bar members 215 are in the extended position 215" thereof. In Figs.2U-2W these are in the retracted position 215' thereof. In Fig.2S-2U the mobile friction clamp members 211 are in the clamping position 211" thereof. In Figs.2V-2W these are in the retracted position 211' thereof. In Fig.2S the mobile latching members 212 are in the latching position 212" thereof. In Figs.2T-2U these are in the retracted position 212' thereof. As in this retracted position 212' the mobile latching members 212 extend in a radial direction within the outer contour of the mobile friction clamp members 211, these are not visible in the top views of Figs.2T-2U. In Fig.2V the mobile latching members 212 are in the latching position 212" thereof, and are visible therein as indicated. In Fig.2W the mobile latching members 212 are in the retracted position 212' thereof and therefore again not visible.

When the mobile friction clamp members 211 are present in the upending and lifting tool 2, these are adapted to frictionally engage an inner surface 11c and/or an outer surface 11d of the tubular monopile body 11, or to engage an inner surface 6c and/or an outer surface 6d of the transition piece 6. Preferably, when present the mobile friction clamp members 211 thereof are embodied as wedge members.

When the mobile latching members 212 are present in the upending and lifting tool 2, these are adapted to latch onto the upper end portion 11a of the monopile 1 and/or onto an upper end portion 6a of the transition piece 6.

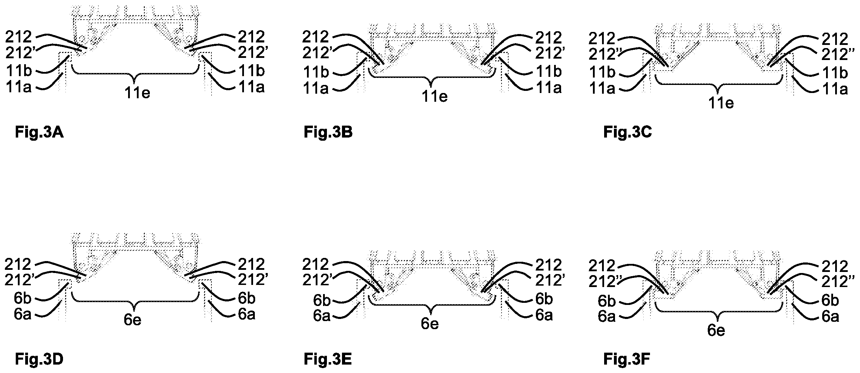

An example of mobile latching members 212 being adapted to latch onto the upper end portion 11a of the tubular monopile body 11 of the monopile 1 is illustrated in Figs.3A-3C. These figures show a vertical cross-section of the upper end 11a of a tubular monopile body 11, which is in this example provided with a radially inward flange 11b. It shows two mobile latching members 212 of an embodiment of the upending and lifting tool 2 as well, wherein these are present. In Fig.3A, the mobile latching members 212 are shown in the retracted position 212' thereof. In this position these can pass through the opening 11e defined by the radially inward flange 11b, so to arrive at the situation illustrated in Fig.3B, wherein the mobile latching members 212 are underneath the radially inward flange 11b. In Fig.3C, the mobile latching members 212 are shown in the latching position 212" thereof, wherein these are underneath the radially inward flange 11b so as to latch underneath it.

An example of mobile latching members 212 being adapted to latch onto the upper end portion 6a of the transition piece 6 is illustrated in Figs.3D-3F. These figures show a vertical cross-section of the upper end 6a of a transition piece 6, which is in this example provided with a radially inward flange 6b. It shows two mobile latching members 212 of an embodiment of the upending and lifting tool 2 as well, wherein these are present. In Fig.3D, the mobile latching members 212 are shown in the retracted position 212' thereof. In this position these can pass through the opening 6e defined by the radially inward flange 6b, so to arrive at the situation illustrated in Fig.3E, wherein the mobile latching members 212 are underneath the radially inward flange 6b. In Fig.3F, the mobile latching members 212 are shown in the latching position 212" thereof, wherein these are underneath the radially inward flange 6b so as to latch underneath it.

In a possible method according to the invention, in connecting an upending and lifting tool 2 to said upper end portion 11a of the tubular monopile body 11 of the monopile 1 in horizontal orientation, the connecting is done specifically by means of the mobile friction clamp members 211, and not by the mobile latching members 212 - in case these are present. Therein the mobile friction clamp members 211 frictionally engage an inner surface 11c and/or an outer surface 11d of the tubular monopile body 11.

In case mobile latching members 212 are present as well, these are in the retracted position at least while connecting an upending and lifting tool 2 to said upper end portion 11a of the tubular monopile body 11 of the monopile 1 in horizontal orientation, during the lifting of the upper end portion 11a of the tubular monopile body 11 by means of said crane 3 and the upending and lifting tool 2, whereby the monopile 1 is rotated from a horizontal orientation into a vertical orientation, and while lowering the monopile 1 and placing the monopile 1 on the seabed by means of the crane 3, and while releasing the upending and lifting tool 2 from the upper end portion 11a of the tubular monopile body 11 of the monopile 1.

Therein, in the particular case that the mobile latching members 212 are provided such to extend in a radial direction within the outer contour of the mobile friction clamp members 211, that is, in the retracted position of these latching members when seen in a top view of the upending and lifting tool 2, the mobile latching members allow the mobile friction clamp members 211 to engage the particular surface without the coming into contact with this surface as well, and do not hinder the positioning of the mobile friction clamp members 212 into the position where these are to engage the surface.

In another possible method according to the invention, connecting an upending and lifting tool 2 to said upper end portion 11a of the tubular monopile body 11 of the monopile 1 in horizontal orientation, the connecting is done specifically by means of the mobile latching members 212, and not by the mobile friction clamp members 211 - in case these are present.

For example as depicted in Fig.3A-C, in a particular one of this possible method the mobile latching members 212 latch underneath the radially inward flange 11b of the tubular monopile body 11 to make the mentioned connection. Therein, this latching is accomplished by advancing from the retracted position 212' of the mobile latching members 212, as illustrated in Fig.3B, to the latching position 212" thereof as illustrated in Fig.3C.

In case mobile friction clamp members 211 are present as well, these are in the retracted position 211' at least while connecting an upending and lifting tool 2 to said upper end portion 11a of the tubular monopile body 11 of the monopile 1 in horizontal orientation, during the lifting of the upper end portion 11a of the tubular monopile body 11 by means of said crane 3 and the upending and lifting tool 2, whereby the monopile 1 is rotated from a horizontal orientation into a vertical orientation, and while lowering the monopile 1 and placing the monopile 1 on the seabed by means of the crane 3, and while releasing the upending and lifting tool 2 from the upper end portion 11a of the tubular monopile body 11 of the monopile 1.

In a preferred possible method according to the invention, in connecting the upending and lifting tool 2, which is after it has been released from the upper end portion 11a of the tubular monopile body 11 of the monopile 1 still suspended from the lifting block 31 of the crane 3, to the pile driving device 5, the mentioned connection is made by means of the mobile friction clamp members 211 or the mobile latching members 212. Thereby, the connection can be established particularly by means of parts of the upending and lifting tool 2 used for handling the monopile 1, so that the need for other means to make this connection in addition to the upending and lifting tool 2 is eliminated, so to save time and/or cost to e.g. provide, attach and/or operate these.

In this same possible method, furthermore the pile driving device 5 is retained by the mobile friction clamp members 211 or the mobile latching members 212 while operating the pile driving device 5 and thereby driving the monopile 1 into the seabed. Thereby, the mentioned retaining of the pile driving device 5 can be performed particularly by means of parts of the upending and lifting tool 2 used for handling the monopile 1, so that the need for other means to perform this function in addition to the upending and lifting tool 2 is eliminated, so to save time and/or cost to e.g. provide, attach and/or operate these.

In this same possible method, in case the connecting is done by means of the mobile friction clamp members 211, the mobile latching members 212 remain in their retracted position 212'. Particularly, in this case the mobile latching members 212 remain in their retracted position 212' during the mentioned connecting of the upending and lifting tool 2 to the pile driving device 5. Furthermore particularly, in this case the mobile latching members 212 remain in their retracted position 212' during the positioning of the suspended pile driving device 5 onto the upper end portion 11a of the tubular monopile body 11 of the monopile 1 by means of the crane 3.

In this same possible method, in case the connecting is done by means of the mobile latching members 212, the mobile friction clamp members 211 remain in their retracted position 211'. Particularly, in this case the mobile friction clamp members 211 remain in their retracted position 211' during the mentioned connecting of the upending and lifting tool 2 to the pile driving device 5. Furthermore particularly, in this case the mobile friction clamp members 211 remain in their retracted position 211' during the positioning of the suspended pile driving device 5 onto the upper end portion 11a of the tubular monopile body 11 of the monopile 1 by means of the crane 3.

In a possible method according to the invention, wherein the rigid frame 21 of the upending and lifting tool 2 comprises the one or more pile driving device connectors 213 in addition to, and distinct from, each of the at least one of mobile friction clamp members 211 and mobile latching members 211, specifically dedicated to connecting a pile driving device 5 to the upending and lifting tool 2, the connecting of the upending and lifting tool 2, which is after it has been released from the upper end portion 11a of the tubular monopile body 11 of the monopile 1 still suspended from the lifting block 31 of the crane 3, to the pile driving device 5 is accomplished by means of these one or more pile driving device connectors 213.

In a particular one of this possible method, wherein the one or more additional pile driving device connectors 213 are be embodied as one or more mobile pile driving device latching members in connecting the upending and lifting tool 2, which is after it has been released from the upper end portion 11a of the tubular monopile body 11 of the monopile 1 still suspended from the lifting block 31 of the crane 3, to the pile driving device 5, the connecting comprises latching of the pile driving device connectors 213 onto the pile driving device 5. This may for example be accomplished by latching underneath, around, inside, etc. one or more protrusions e.g. a flange, and/or one or more depressions, e.g. openings, at an upper end 5a of the pile driving device 5.

In a possible method according to the invention, use is made of a pile driving device 5 that is at an upper end 5a thereof provided with a lifting interface structure 51. This lifting interface structure is adapted to the upending and lifting tool 2 that is used for handling the monopile 1. Thereby, it enables the pile driving device 5 to be connected to the upending and lifting tool 2 by means of parts of the upending and lifting tool 2 used for handling the monopile 1, so that the need for other means to make this connection in addition to the upending and lifting tool 2 is eliminated, so to save time and/or cost to e.g. provide, attach and/or operate these. Therein, in connecting the upending and lifting tool 2, which is after it has been released from the upper end portion 11a of the tubular monopile body 11 of the monopile 1 still suspended from the lifting block 31 of the crane 3, to the pile driving device 5, the mobile friction clamp members present and/or the latching members present of the upending and lifting tool 2 are engaged with the lifting interface structure 51 of the pile driving device 5.

From this, by providing a lifting interface structure 51 to the upper end portion 5a of a pile driving device 5 that is in itself not connectable to the upending and lifting tool 2, this pile driving device 5 can be made suitable to be handled by the upending and lifting tool 2, so to still profit from the time savings its use entails in the method. The provision of the interface structure 51 thereby makes the method suitable for a pile driving devices 5 of different types.

In a preferred method according to the invention, the mobile friction clamp members 211 do not vertically support the radially inward flange 11b of the tubular monopile body 11, in case it is present, at least while connecting an upending and lifting tool 2 to said upper end portion 11a of the tubular monopile body 11 of the monopile 1 in horizontal orientation, during the lifting of the upper end portion 11a of the tubular monopile body 11 by means of said crane 3 and the upending and lifting tool 2, whereby the monopile 1 is rotated from a horizontal orientation into a vertical orientation, and while lowering the monopile 1 and placing the monopile 1 on the seabed by means of the crane 3.

In a possible method according to the invention, wherein the two pivotal spreader bar members 215 are comprised by the upending and lifting tool 2, the method further comprises suspending one or more objects from said pivotal spreader bar members 215 by means of the spreader bar connectors 215d thereof. Therein each of said pivotal spreader bar members 215 is in the extended position 215" thereof. This suspending may for example be established via one or more slings connected to the spreader bar connectors 215d, for instance via a lifting block.

A possible method according to the invention further comprises, prior to lifting the upper end portion 11a of the tubular monopile body 11 by means of said crane 3 and the upending and lifting tool 2, thereby rotating the monopile 1 from a horizontal orientation into a vertical orientation, positioning the monopile 1 in a monopile holder 4 on an installation vessel 7 while being in a horizontal orientation. Therein the monopile 1 may for example be parallel to a longitudinal axis of the installation vessel 7. Fig.1 depicts a monopile 1 after being positioned in the monopile holder 4.

As furthermore illustrated in Fig.1, in this same possible method the monopile holder 4 engages with a circumference of the monopile 1 at a lower side 1a thereof, to hold the monopile 1 in order to limit movement of the lower side 1a of the monopile 1 in a direction perpendicular to a longitudinal axis of the monopile 1. In this same possible method, as shown in Fig.1, the monopile holder 4 furthermore engages with a lower end 1b of the monopile 1 in order to limit movement of the monopile 1 in a direction parallel to the longitudinal axis of the monopile 1.

This same possible method further comprises disengaging the monopile holder 4 from the lower end 1b of the monopile 1, namely after lifting the upper end portion 11a of the tubular monopile body 11 by means of said crane 3 and the upending and lifting tool 2, thereby rotating the monopile 1 from a horizontal orientation into a vertical orientation, and prior to lowering the monopile 1 and placing the monopile 1 on the seabed by means of the crane 3.

In a possible method according to the invention, a transition piece 6 is installed onto the monopile 1 that has been driven into the seabed. In Fig.1, a number of transition pieces 6 to be installed onto the monopiles 1 that are to be driven into the seabed are placed on the deck of the vessel 7. After lifting the upper end portion 11a of the tubular monopile body 11 by means of said crane 3 and the upending and lifting tool 2, thereby rotating the monopile 1 from a horizontal orientation into a vertical orientation, this possible method comprises removing the pile driving device 5 from upper end portion 11a of the monopile 11 by means of the crane 3 and the upending and lifting tool 2.

It further comprises subsequently releasing the pile driving device from the upending and lifting tool 2, and connecting the upending and lifting tool 2 still suspended from the lifting block 31 of the crane 3 to the transition piece 6 thereafter.

It further comprises lifting said transition piece 6 by means of the crane 3 and the upending and lifting tool 2, and subsequently positioning the suspended transition piece 6 onto the upper end portion 11a of the tubular monopile body 11 of the monopile 1 by means of the crane 3 and the upending and lifting tool 2.

By connecting the upending and lifting tool 2 instead of a different tool to the transition piece 6 after releasing it from the pile driving device 5, and having the upending and lifting tool 2 instead of a different tool retain the transition piece 5 while it is being positioned onto the monopile 1, the steps of prior art methods of placing the suspended upending and lifting tool 2 on the deck, detaching it from the lifting block 31, and connecting a different tool to the lifting block 31 in between the releasing of the pile driving device 5 from the upending and lifting tool 2 and the connecting of the upending and lifting tool to the transition piece 6, the upending and lifting tool 2 still being suspended from the lifting block 31 of the crane 3, are eliminated. This makes that by the first and second characterizing features time spent on these steps of prior art methods is eliminated. Thereby this time is saved when using the method according to the first aspect in respect to the prior art methods, so to further contribute to the object of the invention.

In this same possible method, in connecting the upending and lifting tool 2, still suspended from the lifting block 31 of the crane 3, to the transition piece 6, the upending and lifting tool 2 may be connected to the upper end portion 6a of the transition piece 6 specifically by means of the mobile friction clamp members 211, and not by the mobile latching members 212, when present. Therein, the mobile friction clamp members 211 frictionally engage an inner surface and/or an outer surface of the transition piece 6. Furthermore, therein the mobile latching members 212, when present, radially extend within the outer contour of the mobile friction clamp members 211 in the retracted position thereof, when seen in a top view of said upending and lifting tool 2. In this way the mobile latching members 212 allow the mobile friction clamp members 211 to engage the particular surface without the coming into contact with this surface as well, and to not hinder the positioning of the mobile friction clamp members 211 to the position where these are to engage the surface.

Alternatively, in this same possible method, in connecting the upending and lifting tool 2, still suspended from the lifting block 31 of the crane 3, to the transition piece 6, the upending and lifting tool 2 is connected to the upper end portion 6a of the transition piece 6 specifically by means of the mobile latching members 212, and not by the mobile friction clamp members 211, when present.

For example as depicted in Fig.3D-F, in a particular one of this possible method the mobile latching members 212 latch underneath the radially inward flange 6b of the transition piece 6 to make the mentioned connection. Therein, this latching is accomplished by advancing from the retracted position 212' of the mobile latching members 212, as illustrated in Fig.3E, to the latching position 212" thereof as illustrated in Fig.3F.

In a preferred method according to the invention wherein a transition piece 6 is installed onto the monopile 1 that has been driven into the seabed, the mobile friction clamp members 211, when present, do not vertically support the radially inward flange 6b of the transition piece 6, when present, at least while connecting the upending and lifting tool 2 still suspended from the lifting block 31 of the crane 3 to the transition piece 6.

Figs.2A-W illustrate a dual mode tool 2 according to the second aspect of the invention, for installation of a foundation of an offshore wind turbine. In this installation the foundation comprises a monopile 1 that is driven into the seabed, optionally the foundation also comprising a transition piece 6 to be mounted on the monopile 1 after said monopile 1 has been driven into the seabed. Furthermore the monopile 1 has a tubular monopile body 11 with an upper end portion 11a that is optionally provided with a radially inward flange 11b.

As shown in each of Figs.2A-W, the dual mode tool 2 comprises a rigid frame 21. This rigid frame 21 is provided with mobile wedge members 211, which are adapted to frictionally engage an inner surface 11c and/or an outer surface 11d of the tubular monopile body 11, as well as one or more clamping actuators 211a that are at least adapted to move the mobile wedge members 211 from a retracted position into a clamping position. The rigid frame 21 is furthermore provided with an attachment member 214 adapted to attach the dual mode tool 2 to a lifting block 31 of a crane 3.

The tool 2 is firstly characterized by the rigid frame 21 being also provided with mobile latching members 212, which are adapted to latch onto the upper end portion of the tubular monopile body 11 and/or onto the upper end portion 6a of the transition piece 6 and/or onto a pile driving device 5, as well as one or more latching members actuators 212a adapted to move the mobile latching members 212 between a retracted position and a latch position.

Therein, the mobile latching members 212 may for example be adapted to latch underneath a radially inward flange 11b of a tubular monopile body 11 when present, and/or to latch underneath a radially inward flange 6b of a transition piece 6 when present. This latching is for example accomplished by advancing from the retracted position 212' of the mobile latching members 212, for instance as illustrated in Figs.3B and 3E, respectively for connecting the tubular monopile body 11 and the transition piece 6, to the latching position 212" thereof for instance as illustrated in Fig.3C and 3F, respectively.

Furthermore, as illustrated in Fig.3A, therein the mobile latching members 212 may in the retracted position 212' thereof for example be able to pass through an opening 11e defined by the radially inward flange 11b of a tubular monopile body 11 when present. Furthermore, as illustrated in Fig.3C, the mobile latching members 212 may in the retracted position for example be able to pass through an opening 6e defined by the radially inward flange 6b of a transition piece 6, when present. Furthermore, the mobile latching members 212 may for example be able to both pass through an opening 11e defined by the radially inward flange 11b of a tubular monopile body 11, when present, and through an opening 6e defined by the radially inward flange 6b of a transition piece 6, when present.

The tool is firstly characterized by the mobile wedge members 211 being operable independently from the mobile latching members 212, so to connect to a monopile 1, a pile driving device 5, and/or a transition piece 6 by means of either the mobile wedge members 211 or the mobile latching members 212.

As for example shown in Figs.2A, 2F and 2G, in a possible embodiment of the tool 2, the rigid frame 21 thereof further comprises one or more pile driving device connectors 213 in addition to, and distinct from, the mobile wedge members 211 and mobile latching members 212. These pile driving device connectors 213 are adapted to latch onto the upper end portion 11a of the tubular monopile body 11 and/or onto the upper end portion 6a of the transition piece 6.

In this same possible embodiment of the tool 2, for example the embodiment shown in Fig.2A, 2F and 2G, each of the one or more additional pile driving device connectors 213 may be adapted to connect the tool 2 to the upper end 5a of the pile driving device 5. Therein the upper end 5a of the pile driving device 5 may have a diameter which is substantially smaller than a diameter of the upper end portion 11a of the tubular monopile body 11 of the monopile 1 and/or of the transition piece 6.

In a possible embodiment of the tool 2 according to the invention, the mobile friction clamp members 211 in the retracted position 211' thereof in a top view of the tool 2 radially extend within the outer contour of the mobile latching members 212.

In a possible embodiment of the tool 2 according to the invention, as shown in Fig.2A-W, the rigid frame 21 comprises two diametrically opposite pivotal spreader bar members 215. These pivotal spreader bar members 215 are at a radially proximal end 215a thereof pivotally connected to the rigid frame 21. This embodiment comprises two spreader bar actuators 215c as well, which are at least adapted to move the two pivotal spreader bar members 215 from the retracted position 215' thereof into the extended position 215" thereof.

In this same embodiment the pivotal spreader bar members 215 are each at a radially remote end 215b thereof provided with a spreader bar connector 215d. Therein each spreader bar connector 215d in the extended position 215" of the pivotal spreader bar members 215 in a top view of the tool 2 is in a radial position outside the outer contour of the one or more mobile friction clamp members 211 and/or the outer contour of the one or more mobile latching members 212.

In a possible embodiment of the tool according to the invention, the pivotal spreader bar members 215 are at a radially proximal end 215a thereof being pivotally connected to the attachment member 214.

## Claims

1. Method for installation of a foundation for an offshore wind turbine, said foundation comprising a monopile (1) that is driven into the seabed, optionally the foundation also comprising a transition piece (6) to be installed on the monopile (1) after said monopile (1) has been driven into the seabed, said method comprising the following steps:
a) transporting a monopile (1) in a horizontal orientation to an offshore installation site, said monopile (1) having a tubular monopile body (11) with an upper end portion (11a) that is optionally provided with a radially inward flange (11b),
b) connecting an upending and lifting tool (2) to said upper end portion (11a) of the tubular monopile body (11) of the monopile (1) in horizontal orientation, wherein said upending and lifting tool (2) comprises a frame (21), said frame (21) being provided with at least one of:
- mobile friction clamp members (211) adapted to frictionally engage an inner surface (11c) and/or an outer surface (11d) of the upper end portion (11a) of the tubular monopile body (11) and/or engage an inner surface and/or an outer surface of the upper end portion (6a) of the transition piece (6), as well as one or more clamping actuators (211a) that are at least adapted to move the friction clamp members (211) from a retracted position (211') into a clamping position (212"), and
- mobile latching members (212) adapted to latch onto the upper end portion (11a) of the monopile (1) and/or onto an upper end portion (6a) of the transition piece (6a), e.g. to latch underneath the radially inward flange (11b) of the monopile (1) when present and/or underneath a radially inward flange (6b) of an upper end portion (6a) of the transition piece (6) when present, as well as one or more latching members actuators (212a) adapted to move the mobile latching members (212) between a retracted position (212'), e.g. wherein the mobile latching members (212) can pass through an opening (11e) defined by the radially inward flange (11b) when present, and a latching position (212"), e.g. wherein the mobile latching members (212) are underneath the radially inward flange (11b),
said frame (21) being provided with an attachment member (214) attaching or adapted to attach the upending and lifting tool (2) to a lifting block (31) of a crane (3),
c) lifting the upper end portion (11a) of the tubular monopile body (11) by means of said crane (3) and the upending and lifting tool (2), thereby rotating the monopile (1) from a horizontal orientation into a vertical orientation,
d) lowering the monopile (1) and placing the monopile (1) on the seabed by means of the crane (3), preferably accompanied by retaining the monopile (1) in vertical orientation by means of a monopile holder (4),
e) releasing the upending and lifting tool (2) from the upper end portion (11a) of the tubular monopile body (11) of the monopile (1),
f) suspending a pile driving device (5) from the lifting block (31) of the crane (3),
g) positioning said suspended pile driving device (5) onto the upper end portion (11a) of the tubular monopile body (11) of the monopile (1) by means of said crane (3),
h) operating the pile driving device (5) and thereby driving the monopile (1) into the seabed,
**characterized in that**,
the method comprises after step e) and prior to step f) the step of connecting the upending and lifting tool (2) still attached to the lifting block (31) of the crane (3) to the pile driving device (5),
and **in that** in step g) the pile driving device (5) is retained by said upending and lifting tool (2),
and **in that**, optionally, after step g) and prior to step h) the upending and lifting tool (2) is released from the pile driving device (5) that has been positioned on the monopile (1).

2. Method according to claim 1, wherein in step b) the upending and lifting tool (2) is connected to the upper end portion (11a) of the tubular monopile body (11) by means of the mobile friction clamp members (211), and not by the mobile latching members (212), when present,
said mobile friction clamp members (211) frictionally engaging an inner surface (11c) and/or an outer surface (11d) of the tubular monopile body (11),
and wherein said mobile latching members (212), when present, in the retracted position (212') thereof in a top view of said upending and lifting tool (2) radially extend within the outer contour of the mobile friction clamp members (211),
and wherein at least during steps b), c), d) and e) said mobile latching members (212), when present, remain in their retracted position (212').

3. Method according to claim 1, wherein the upper end portion (11a) of the tubular monopile body (11) is provided with said radially inward flange (11b), and wherein in step b) the upending and lifting tool (2) is connected to the upper end portion (11a) of the tubular monopile body (11) by means of the mobile latching members (212), and not by the mobile friction clamp members (211), when present,
said mobile latching members (212) latching underneath the radially inward flange (11b) of the tubular monopile body (11),
and wherein at least during steps b), c), d) and e) said mobile friction clamp members (211), when present, remain in their retracted position (211').

4. Method according any of the preceding claims, wherein - in the step after step e) and prior to step f) of connecting the upending and lifting tool (2) still attached to the lifting block (31) of the crane (3) to the pile driving device (5) - said connecting is done by means of either the mobile friction clamp members (211) or the mobile latching members (212) of the upending and lifting tool (2) used for handling the monopile (1),
and wherein during step g) the pile driving device is retained by means of either the mobile friction clamp members (211) or the mobile latching members (212) of the upending and lifting tool (2) used for handling the monopile (1).

5. Method according to any of the preceding claims, wherein the frame (21) of the upending and lifting tool (2) further comprises one or more additional pile driving device connectors (213) in addition to and distinct from each of said at least one of mobile friction clamp members and mobile latching members,
and wherein - in the step of connecting the upending and lifting tool (2) still suspended from the lifting block (31) of the crane (3) to the pile driving device (5) - said connecting is done by means of one or more of the additional pile driving device connectors (213),
wherein preferably, a diameter of the upper end (5a) of the pile driving device (5) is substantially smaller than a diameter of the upper end portion (11a) of the tubular monopile body (11) of the monopile (1), e.g. at least two times smaller.

6. Method according to claim 5, wherein said one or more additional pile driving device connectors (213) are embodied as one or more mobile pile driving device latching members, and wherein - in the step of connecting the upending and lifting tool (2) still suspended from the lifting block (31) of the crane (3) to the pile driving device (5) - said connecting comprises latching of said additional pile driving device connectors (213) onto the pile driving device (5), e.g. underneath one or more protrusions and/or a flange at an upper end (5a) of the pile driving device (5).

7. Method according to any of the preceding claims, which prior to step c), further comprises the step of positioning the monopile (1) in a pile holder (4) on an installation vessel (7) while being in a horizontal orientation, e.g. parallel to a longitudinal axis of the installation vessel (7),
wherein said pile holder (4) engages with a circumference of the monopile (1) at a lower side (1a) thereof to hold the monopile (1) in order to limit movement of the lower side (1a) of the monopile (1) in a direction perpendicular to a longitudinal axis of the monopile (1),
and wherein the pile holder (4) engages with a lower end (1b) of the monopile (1) in order to limit movement of the monopile (1) in a direction parallel to the longitudinal axis of the monopile (1),
and after step c) and prior to step d) further comprises the step of disengaging the pile holder (4) from the lower end (1b) of the monopile (1).

8. Method according to any of the preceding claims, wherein a transition piece (6) is installed onto the monopile (1) that has been driven into the seabed, and wherein the method comprises after step h) the following steps:
i) removing the pile driving device (5) from upper end portion (11a) of the monopile (1) by means of the crane (3) and the upending and lifting tool (2),
j) releasing the pile driving device (5) from the upending and lifting tool (2),
k) connecting the upending and lifting tool (2) still suspended from the lifting block (31) of the crane (3) to the transition piece (6), e.g. wherein the transition piece (6) is provided at an upper end portion (6a) thereof with a radially inward flange (6b) and wherein the upending and lifting tool (2) is provided with said mobile latching members (212) and wherein the mobile latching members (212) are moved into said latching position (212"),
l) lifting said transition piece (6) by means of the crane (3) and the upending and lifting tool (2),
m) positioning said suspended transition piece (6) onto the upper end portion (11a) of the tubular monopile body (11) of the monopile (1) by means of said crane (3) and the upending and lifting tool.
wherein, preferably, in step k) the upending and lifting tool (2) is connected to the upper end portion (6a) of the transition piece (6) by means of the mobile friction clamp members (211), and not by the mobile latching members (212), when present, said mobile friction clamp members (211) frictionally engage an inner surface and/or an outer surface of the transition piece (6), and said mobile latching members (212), when present, in the retracted position (212') thereof in a top view of said upending and lifting tool (2) radially extend within the outer contour of the mobile friction clamp members (211),
e.g. wherein at least during step k) said mobile friction clamp members (211), when present, do not vertically support the radially inward flange (6b) of the transition piece (6), when present.

9. Method according to claim 8, wherein the upper end portion (6a) of the transition piece (6) is provided with a radially inward flange (6b), and wherein in step k) the upending and lifting tool (2) is connected to the upper end portion (6a) of the transition piece (6) by means of the mobile latching members (212), and not by the mobile friction clamp members (211), when present,
said mobile latching members (212) latching underneath the radially inward flange (6b) of the transition piece (6).

10. Dual mode tool (2) for installation of a foundation of an offshore wind turbine, said foundation comprising a monopile (1) that is driven into the seabed, optionally the foundation also comprising a transition piece (6) to be mounted on the monopile (1) after said monopile (1) has been driven into the seabed,
said monopile (1) having a tubular monopile body (11) with an upper end portion (11a) that is optionally provided with a radially inward flange (11b),
said dual mode tool (2) comprising a rigid frame (21),
said rigid frame (21) being provided with mobile wedge members (211) adapted to frictionally engage an inner surface (11c) and/or an outer surface (11d) of the tubular monopile body (11), as well as one or more clamping actuators (211a) that are at least adapted to move the mobile wedge members (211) from a retracted position (211') into a clamping position (211"), and
said rigid frame (21) being provided with an attachment member (214) adapted to attach the dual mode tool (2) to a lifting block (31) of a crane (3),
**characterized in that**
said rigid frame (21) is also provided with mobile latching members (212) adapted to latch onto the upper end portion (11a) of the tubular monopile body (11) and/or onto the upper end portion (6a) of the transition piece (6) and/or onto a pile driving device (5), e.g. to latch underneath a radially inward flange, when present, as well as one or more latching members actuators (212a) adapted to move the mobile latching members (212) between a retracted position (212'), e.g. wherein the mobile latching members (212) can pass through an opening (11e) defined by the radially inward flange (11b) of the upper end portion (11a) of the tubular monopile body (11) when present, and a latching position (212"), e.g. wherein the mobile latching members (212) are underneath the radially inward flange (11b),
and **in that** the mobile wedge members (211) are operable independently from the mobile latching members (212), so to connect to a monopile (1), a pile driving device (5), and/or a transition piece (6) by means of either said mobile wedge members (211) or said mobile latching members (212).

11. Tool (2) according to claim 10, wherein the rigid frame (21) of the tool (2) further comprises one or more additional pile driving device connectors (213) in addition to and distinct from said mobile wedge members (211) and mobile latching members (212) adapted to latch onto the upper end portion (11a) of the tubular monopile body (11) and/or onto the upper end portion (6a) of the transition piece (6).

12. Tool according to claim 11, said one or more additional pile driving device connectors (213) being adapted to connect the tool (2) to the upper end (5a) of the pile driving device (5), said upper end (5a) of the pile driving device (5) having a diameter which is substantially smaller than a diameter of the upper end portion (11a) of the tubular monopile body (11) of the monopile (1) and/or of the transition piece (6).

13. Tool according to any of claims 10-12, wherein said mobile friction clamp members (211) in the retracted position (211') thereof in a top view of said tool (2) radially extend within the outer contour of the mobile latching members (212).

14. Tool according to any of claims 10-13, wherein the rigid frame (21) comprises two diametrically opposite pivotal spreader bar members (215),
said pivotal spreader bar members (215) at a radially proximal end (215a) thereof being pivotally connected to the rigid frame (21) as well as two spreader bar actuators (215c) that are at least adapted to move the two pivotal spreader bar members (215) from the retracted position (215') thereof into the extended position (215"),
said pivotal spreader bar members (215) each at a radially remote end (215b) thereof being provided with a spreader bar connector (215d),
wherein each spreader bar connector (215d) in the extended position (215") of the pivotal spreader bar members (215) in a top view of said tool (2) is in a radial position outside the outer contour of the one or more mobile friction clamp members (211) and/or the outer contour of the one or more mobile latching members (212).

15. Tool according to any of claims 10-14, wherein the pivotal spreader bar members (215) are at a radially proximal end (215a) thereof pivotally connected to the attachment member (214).

## Patentansprüche

1. Verfahren zur Installation eines Fundaments für eine Offshore-Windturbine, wobei das Fundament einen Monopile (1) umfasst, der in den Meeresboden getrieben wird, wobei das Fundament optional auch ein Übergangsstück (6) umfasst, das auf dem Monopile (1) installiert werden kann, nachdem der Monopile (1) in den Meeresboden getrieben wurde, wobei das Verfahren die folgenden Schritte umfasst:
a) Transportieren eines Monopile (1) in einer horizontalen Ausrichtung zu einem Offshore-Installationsort, wobei der Monopile (1) einen rohrförmigen Monopilekörper (11) mit einem oberen Endabschnitt (11a) aufweist, der optional mit einem radial nach innen gerichteten Flansch (11b) versehen ist,
b) Verbinden eines Aufricht- und Hebewerkzeugs (2) mit dem oberen Endabschnitt (11a) des rohrförmigen Monopilekörpers (11) des Monopiles (1) in horizontaler Ausrichtung, wobei das Aufricht- und Hebewerkzeug (2) ein Gestell (21) umfasst, wobei das Gestell (21) mit mindestens einem der folgenden Elemente versehen ist:
- beweglichen Reibungsklemmelementen (211), die so ausgebildet sind, dass sie reibschlüssig mit einer Innenfläche (11c) und/oder einer Außenfläche (11d) des oberen Endabschnitts (11a) des rohrförmigen Monopilekörpers (11) und/oder mit einer Innenfläche und/oder einer Außenfläche des oberen Endabschnitts (6a) des Übergangsstücks (6) in Eingriff kommen, sowie mit einem oder mehreren Klemmbetätigungselementen (211a), die zumindest so ausgebildet sind, dass sie die Reibungsklemmelemente (211) aus einer zurückgezogenen Position (211') in eine Klemmposition (212") bewegen, und
- bewegliche Verriegelungselemente (212), die ausgebildet sind, um z.B. am oberen Endabschnitt (11a) des Monopiles (1) und/oder an einem oberen Endabschnitt (6a) des Übergangsstückes (6a) einzurasten, z.B. um unterhalb des radial inneren Flansches (11b) des Monopiles (1), wenn vorhanden, und/oder unterhalb eines radial inneren Flansches (6b) eines oberen Endabschnittes (6a) des Übergangsstückes (6), wenn vorhanden, einzurasten, sowie ein oder mehrere Verriegelungselement-Betätigungsglieder (212a), die ausgebildet sind, um die beweglichen Verriegelungselemente (212) zwischen einer zurückgezogenen Position (212'), in der die beweglichen Verriegelungselemente (212) z.B. durch eine Öffnung (11e), die durch den radial inneren Flansch (11b) definiert ist, wenn vorhanden, passieren, und einer Verriegelungsposition (212"), in der sich die beweglichen Verriegelungselemente (212) z.B. unterhalb des radial inneren Flansches (11b) befinden, zu bewegen,
wobei das Gestell (21) mit einem Befestigungselement (214) versehen ist, das das Aufricht- und Hebewerkzeug (2) an einem Hebeblock (31) eines Krans (3) befestigt oder ausgebildet ist, um dieses zu befestigen,
c) Anheben des oberen Endabschnitts (11a) des rohrförmigen Monopilekörpers (11) mit Hilfe des Krans (3) und des Aufricht- und Hebewerkzeugs (2), wodurch der Monopile (1) aus einer horizontalen Ausrichtung in eine vertikale Ausrichtung rotiert wird,
d) Absenken des Monopiles (1) und Platzieren des Monopiles (1) auf dem Meeresboden mit Hilfe des Krans (3), vorzugsweise in Verbindung mit einem Halten des Monopiles (1) in vertikaler Ausrichtung mit Hilfe eines Monopilehalters (4),
e) Lösen des Aufricht- und Hebewerkzeugs (2) vom oberen Endteil (11a) des röhrenförmigen Monopilekörpers (11) des Monopiles (1),
f) Aufhängen einer Pfahlrammvorrichtung (5) am Hebeblock (31) des Krans (3),
g) Positionieren der hängenden Pfahlrammvorrichtung (5) auf dem oberen Endabschnitt (11a) des rohrförmigen Monopilekörpers (11) des Monopiles (1) mit Hilfe des Krans (3),
h) Betätigen der Pfahlrammvorrichtung (5) und dadurch Eintreiben des Monopiles (1) in den Meeresboden,
**dadurch gekennzeichnet, dass** das Verfahren nach Schritt e) und vor Schritt f) den Schritt eines Verbindens des noch am Hebeblock (31) des Krans (3) befestigten Aufricht- und Hebewerkzeugs (2) mit der Pfahlrammvorrichtung (5) umfasst,
und dass in Schritt g) die Pfahlrammvorrichtung (5) von dem Aufricht- und Hebewerkzeug (2) gehalten wird,
und dass, optional, nach Schritt g) und vor Schritt h) das Aufricht- und Hebewerkzeug (2) von der Pfahlrammvorrichtung (5), die auf dem Monopile (1) positioniert ist, gelöst wird.

2. Verfahren nach Anspruch 1, wobei in Schritt b) das Aufricht- und Hebewerkzeug (2) mit dem oberen Endabschnitt (11a) des rohrförmigen Monopilekörpers (11) mittels der beweglichen Reibungsklemmelemente (211) und nicht durch die beweglichen Verriegelungselemente (212), falls vorhanden, verbunden wird,
wobei die beweglichen Reibungsklemmelemente (211) reibschlüssig an einer Innenfläche (11c) und/oder einer Außenfläche (11d) des röhrenförmigen Monopilekörpers (11) angreifen,
und wobei sich die beweglichen Verriegelungselemente (212), wenn vorhanden, in ihrer zurückgezogenen Position (212') in einer Draufsicht auf das Aufricht- und Hebewerkzeug (2) radial innerhalb der äußeren Kontur der beweglichen Reibungsklemmelemente (211) erstrecken,
und wobei mindestens während der Schritte b), c), d) und e) die beweglichen Verriegelungselemente (212), falls vorhanden, in ihrer zurückgezogenen Position (212') verbleiben.

3. Verfahren nach Anspruch 1, wobei der obere Endabschnitt (11a) des rohrförmigen Monopilekörpers (11) mit dem radial nach innen gerichteten Flansch (11b) versehen ist, und wobei in Schritt b) das Aufricht- und Hebewerkzeug (2) mit dem oberen Endabschnitt (11a) des rohrförmigen Monopilekörpers (11) mittels der beweglichen Verriegelungselemente (212) und nicht durch die beweglichen Reibungsklemmelemente (211), falls vorhanden, verbunden wird,
wobei die beweglichen Verriegelungselemente (212) unter dem radial nach innen gerichteten Flansch (11b) des rohrförmigen Monopilekörpers (11) einrasten,
und wobei mindestens während der Schritte b), c), d) und e) die beweglichen Reibungsklemmelemente (211), falls vorhanden, in ihrer zurückgezogenen Position (211') verbleiben.

4. Verfahren gemäß einem der vorhergehenden Ansprüche, wobei - in dem Schritt nach Schritt e) und vor Schritt f) des Verbindens des Aufricht- und Hebewerkzeugs (2), das noch am Hebeblock (31) des Krans (3) befestigt ist, mit der Pfahlrammvorrichtung (5) - dieses Verbinden entweder mit Hilfe der beweglichen Reibungsklemmelemente (211) oder der beweglichen Verriegelungselemente (212) des Aufricht- und Hebewerkzeugs (2) erfolgt, die zur Handhabung des Monopiles (1) verwendet werden, und wobei während Schritt g) die Pfahlrammvorrichtung entweder mittels der beweglichen Reibungsklemmelemente (211) oder der beweglichen Verriegelungselemente (212) des Aufricht- und Hebewerkzeugs (2), das zur Handhabung des Monopiles (1) verwendet wird, gehalten wird.

5. Verfahren nach einem der vorhergehenden Ansprüche, wobei das Gestell (21) des Aufricht- und Hebewerkzeugs (2) weiter ein oder mehrere zusätzliche Verbindungsstücke (213) für eine Pfahlrammvorrichtung zusätzlich zu und getrennt von jedem der mindestens einen beweglichen Reibungsklemmelemente und der beweglichen Verriegelungselemente aufweist,
und wobei - in dem Schritt des Verbindens des Aufricht- und Hebewerkzeugs (2), das noch an dem Hebeblock (31) des Krans (3) hängt, mit der Pfahlrammvorrichtung (5) - das Verbinden mittels eines oder mehrerer der zusätzlichen Verbindungsstücke (213) der Pfahlrammvorrichtung erfolgt,
wobei vorzugsweise ein Durchmesser des oberen Endes (5a) der Pfahlrammvorrichtung (5) wesentlich kleiner ist als ein Durchmesser des oberen Endabschnitts (11a) des rohrförmigen Monopilekörpers (11) des Monopiles (1), z.B. mindestens zweimal kleiner.

6. Verfahren nach Anspruch 5, wobei das eine oder die mehreren zusätzlichen Pfahlrammvorrichtungs-Verbindungsstücke (213) als ein oder mehrere Verriegelungselemente für mobile Pfahlrammvorrichtungen ausgebildet sind, und wobei - in dem Schritt des Verbindens des noch am Hebeblock (31) des Krans (3) hängenden Aufricht- und Hebewerkzeugs (2) mit der Pfahlrammvorrichtung (5) - das Verbinden ein Einrasten der zusätzlichen Pfahlrammvorrichtungs-Verbindungsstücke (213) an der Pfahlrammvorrichtung (5) umfasst, e. g. unterhalb eines oder mehrerer Vorsprünge und/oder eines Flansches an einem oberen Ende (5a) der Pfahlrammvorrichtung (5).

7. Verfahren nach einem der vorhergehenden Ansprüche, das vor Schritt c) weiter den Schritt eines Positionierens des Monopiles (1) in einem Pfahlhalter (4) auf einem Installationsbehälter (7) in horizontaler Ausrichtung, z.B. parallel zu einer Längsachse des Installationsbehälters (7), umfasst, wobei der Pfahlhalter (4) auf dem Installationsbehälter (7) horizontal ausgerichtet ist,
wobei der Pfahlhalter (4) mit einem Umfang des Monopiles (1) an einer unteren Seite (1a) desselben in Eingriff steht, um den Monopile (1) zu halten, um die Bewegung der unteren Seite (1a) des Monopiles (1) in einer Richtung senkrecht zu einer Längsachse des Monopiles (1) zu begrenzen,
und wobei der Pfahlhalter (4) mit einem unteren Ende (1b) des Monostapels (1) in Eingriff steht, um die Bewegung des Monostapels (1) in einer Richtung parallel zur Längsachse des Monostapels (1) zu begrenzen,
und nach Schritt c) und vor Schritt d) weiterhin den Schritt eines Lösens des Pfahlhalters (4) vom unteren Ende (1b) des Monopiles (1) umfasst.

8. Verfahren nach einem der vorhergehenden Ansprüche, wobei ein Übergangsstück (6) auf dem Monopile (1), der in den Meeresboden getrieben wurde, installiert wird, und wobei das Verfahren nach Schritt h) die folgenden Schritte umfasst:
i) Entfernen der Pfahlrammvorrichtung (5) vom oberen Endabschnitt (11a) des Monopiles (1) mit Hilfe des Krans (3) und des Aufricht- und Hebewerkzeugs (2),
j) Lösen der Pfahlrammvorrichtung (5) vom Aufricht- und Hebewerkzeug (2),
k) Verbinden des Aufricht- und Hebewerkzeugs (2), das noch an dem Hebeblock (31) des Krans (3) hängt, mit dem Übergangsstück (6), z.B. wobei das Übergangsstück (6) an seinem oberen Endabschnitt (6a) mit einem radial nach innen gerichteten Flansch (6b) versehen ist und wobei das Aufricht- und Hebewerkzeug (2) mit den beweglichen Verriegelungselementen (212) versehen ist und wobei die beweglichen Verriegelungselemente (212) in die Verriegelungsposition (212") bewegt werden,
l) Anheben des Übergangsstücks (6) mit Hilfe des Krans (3) und des Aufricht- und Hebewerkzeugs (2),
m) Positionieren des aufgehängten Übergangsstücks (6) auf dem oberen Endabschnitt (11 a) des rohrförmigen Monopilekörpers (11) des Monopiles (1) mit Hilfe des Krans (3) und des Aufricht- und Hebewerkzeugs,
wobei, vorzugsweise in Schritt k), das Aufricht- und Hebewerkzeug (2) mit dem oberen Endabschnitt (6a) des Übergangsstücks (6) mittels der beweglichen Reibungsklemmelemente (211) und nicht durch die beweglichen Verriegelungselemente (212), falls vorhanden, verbunden ist, die beweglichen Reibungsklemmelemente (211) reibschlüssig an einer Innenfläche und/oder einer Außenfläche des Übergangsstücks (6) angreifen, und die beweglichen Verriegelungselemente (212), wenn vorhanden, sich in deren zurückgezogener Position (212') in einer Draufsicht auf das Aufricht- und Hebewerkzeug (2) radial innerhalb der Außenkontur der beweglichen Reibungsklemmelemente (211) erstrecken,
z.B. wobei zumindest während Schritt k) die beweglichen Reibungsklemmelemente (211), falls vorhanden, den radial inneren Flansch (6b) des Übergangsstücks (6), falls vorhanden, nicht vertikal stützen.

9. Verfahren nach Anspruch 8, wobei der obere Endabschnitt (6a) des Übergangsstücks (6) mit einem radial nach innen gerichteten Flansch (6b) versehen ist, und wobei in Schritt k) das Aufricht- und Hebewerkzeug (2) mit dem oberen Endabschnitt (6a) des Übergangsstücks (6) mittels der beweglichen Verriegelungselemente (212) und nicht durch die beweglichen Reibungsklemmelemente (211), falls vorhanden, verbunden wird,
wobei die beweglichen Verriegelungselemente (212) unterhalb des radial nach innen gerichteten Flansches (6b) des Übergangsstücks (6) einrasten.

10. Dualmodus-Werkzeug (2) zur Installation eines Fundaments einer Offshore-Windturbine, wobei das Fundament einen Monopile (1) umfasst, der in den Meeresboden getrieben wird, wobei das Fundament optional auch ein Übergangsstück (6) umfasst, das auf dem Monopile (1) montiert werden kann, nachdem der Monopile (1) in den Meeresboden getrieben worden ist,
wobei der Monopilekörper (1) einen rohrförmigen Monopilekörper (11) mit einem oberen Endabschnitt (11a) aufweist, der optional mit einem radial nach innen gerichteten Flansch (11b) versehen ist,
wobei das Dualmodus-Werkzeug (2) ein starres Gestell (21) umfasst,
wobei das Gestell (21) mit beweglichen Keilelementen (211) versehen ist, die so ausgebildet sind, dass sie reibschlüssig an einer Innenfläche (11c) und/oder einer Außenfläche (11d) des rohrförmigen Monopilekörpers (11) angreifen, sowie mit einem oder mehreren Klemmbetätigungselementen (211a), die mindestens so ausgebildet sind, dass sie die beweglichen Keilelemente (211) aus einer zurückgezogenen Position (211') in eine Klemmposition (211") bewegen, und
wobei das Gestell (21) mit einem Befestigungselement (214) versehen ist, das ausgebildet ist, um das Dualmodus-Werkzeug (2) an einem Hebeblock (31) eines Krans (3) zu befestigen,
**dadurch gekennzeichnet,**
**dass** das starre Gestell (21) zusätzlich mit beweglichen Verriegelungselementen (212) versehen ist, die so ausgebildet sind, dass sie an dem oberen Endabschnitt (11a) des rohrförmigen Monopilekörpers (11) und/oder an dem oberen Endabschnitt (6a) des Übergangsstücks (6) und/oder an einer Pfahlrammvorrichtung (5) einrasten können, beispielsweise unter einem radial nach innen gerichteten Flansch, falls vorhanden, sowie mit einem oder mehreren Verriegelungselement-Betätigungselementen (212a), die so ausgebildet sind, dass sie die beweglichen Verriegelungselemente (212) zwischen einer zurückgezogenen Position (212'), in welcher die beweglichen Verriegelungselemente (212) z.B. durch eine Öffnung (11e), die durch den radial inneren Flansch (11b) des oberen Endabschnitts (11a) des rohrförmigen Monopilekörpers (11) definiert ist, wenn vorhanden, passieren, und einer Verriegelungsposition (212"), in welcher die beweglichen Verriegelungselemente (212a) sich z.B. unterhalb des radial inneren Flansches (11b) befinden, bewegen können,
und **dass** die beweglichen Keilelemente (211) unabhängig von den beweglichen Verriegelungselementen (212) betätigbar sind, so dass sie entweder mittels der beweglichen Keilelemente (211) oder der beweglichen Verriegelungselemente (212) mit einem Monopile (1), einer Pfahlrammvorrichtung (5) und/oder einem Übergangsstück (6) verbunden werden können.

11. Werkzeug (2) nach Anspruch 10, wobei das starre Gestell (21) des Werkzeugs (2) weiter einen oder mehrere zusätzliche Verbindungsstücke (213) für die Pfahlrammvorrichtung zusätzlich zu und getrennt von den beweglichen Keilgliedern (211) und beweglichen Verriegelungsgliedern (212) aufweist, die so ausgebildet sind, dass sie in den oberen Endabschnitt (11a) des rohrförmigen Monopilekörpers (11) und/oder in den oberen Endabschnitt (6a) des Übergangsstücks (6) einrasten.

12. Werkzeug nach Anspruch 11, wobei ein oder mehrere zusätzliche Verbindungsstücke (213) der Pfahlrammvorrichtung ausgebildet sind, um das Werkzeug (2) mit dem oberen Ende (5a) der Pfahlrammvorrichtung (5) zu verbinden, wobei das obere Ende (5a) der Pfahlrammvorrichtung (5) einen Durchmesser aufweist, der im Wesentlichen kleiner als ein Durchmesser des oberen Endabschnitts (11a) des rohrförmigen Monopilekörpers (11) des Monopiles (1) und/oder des Übergangsstückes (6).

13. Werkzeug nach einem der Ansprüche 10-12, wobei sich die beweglichen Reibungsklemmelemente (211) in ihrer zurückgezogenen Position (211') in einer Draufsicht auf das Werkzeug (2) radial innerhalb der äußeren Kontur der beweglichen Verriegelungselemente (212) erstrecken.

14. Werkzeug nach einem der Ansprüche 10-13, wobei das Gestell (21) zwei diametral gegenüberliegende schwenkbare Spreizstangenelemente (215) aufweist,
wobei die schwenkbaren Spreizstangenelemente (215) an ihrem radial proximalen Ende (215a) schwenkbar mit dem Gestell (21) verbunden sind, sowie zwei Spreizstangenbetätiger (215c), die zumindest ausgebildet sind, um die beiden schwenkbaren Spreizstangenelemente (215) aus ihrer zurückgezogenen Position (215') in die ausgefahrene Position (215") zu bewegen,
wobei die schwenkbaren Spreizstangenelemente (215) jeweils an einem radial entfernten Ende (215b) davon mit einem Spreizstangenverbinder (215d) versehen sind,
wobei sich jeder Spreizstangenverbinder (215d) in der ausgefahrenen Position (215") der schwenkbaren Spreizstangenelemente (215) in einer Draufsicht auf das Werkzeug (2) in einer radialen Position außerhalb der Außenkontur des einen oder der mehreren beweglichen Reibungsklemmelemente (211) und/oder der Außenkontur des einen oder der mehreren beweglichen Verriegelungselemente (212) befindet.

15. Werkzeug nach einem der Ansprüche 10-14, wobei die schwenkbaren Spreizstangenelemente (215) an einem radial proximalen Ende (215a) davon schwenkbar mit dem Befestigungselement (214) verbunden sind.

## Revendications

1. Procédé pour l'installation d'une fondation d'une éolienne en mer, ladite fondation comprenant une monopile (1) qui est entraînée dans le lit marin, facultativement la fondation comprenant également une pièce de transition (6) à installer sur la monopile (1) après que ladite monopile (1) a été entraînée dans le lit marin, ledit procédé comprenant les étapes suivantes consistant à :
a) transporter une monopile (1) dans une orientation horizontale jusqu'à un site d'installation en mer, ladite monopile (1) ayant un corps de monopile tubulaire (11) avec une partie d'extrémité supérieure (11a) qui est facultativement prévue avec une bride radialement vers l'intérieur (11b),
b) raccorder un outil de redressement et de levage (2) à ladite partie d'extrémité supérieure (11a) du corps de monopile tubulaire (11) de la monopile (1) dans l'orientation horizontale, dans lequel ledit outil de redressement et de levage (2) comprend un bâti (21), ledit bâti (21) étant prévu avec au moins l'un parmi :
des éléments de serrage à friction mobiles (211) adaptés pour mettre en prise par friction une surface interne (11c) et/ou une surface externe (11d) de la partie d'extrémité supérieure (11a) du corps de monopile tubulaire (11) et/ou mettre en prise une surface interne et/ou une surface externe de la partie d'extrémité supérieure (6a) de la pièce de transition (6), ainsi qu'un ou plusieurs actionneurs de serrage (211a) qui sont au moins adaptés pour déplacer les éléments de serrage à friction (211) d'une position rétractée (211') à une position de serrage (212"), et
des éléments de verrouillage mobiles (212) adaptés pour se verrouiller sur la partie d'extrémité supérieure (11a) de la monopile (1) et/ou sur une partie d'extrémité supérieure (6a) de la pièce de transition (6a), par exemple pour verrouiller au-dessous de la bride radialement vers l'intérieur (11b) de la monopile (1) lorsqu'elle est présente et/ou au-dessous d'une bride radialement vers l'intérieur (6b) d'une partie d'extrémité supérieure (6a) de la pièce de transition (6) lorsqu'elle est présente, ainsi qu'un ou plusieurs actionneurs d'éléments de verrouillage (212a) adaptés pour déplacer les éléments de verrouillage mobiles (212) entre une position rétractée (212'), par exemple dans lequel les éléments de verrouillage mobiles (212) peuvent passer à travers une ouverture (11e) définie par la bride radialement vers l'intérieur (11b) lorsqu'elle est présente, et une position de verrouillage (212"), par exemple dans lequel les éléments de verrouillage mobiles (212) sont au-dessous de la bride radialement vers l'intérieur (11b),
ledit bâti (21) étant prévu avec un élément de fixation (214) fixant ou adapté pour fixer l'outil de redressement et de levage (2) à un bloc de levage (31) d'une grue (3),
c) lever la partie d'extrémité supérieure (11a) du corps de monopile tubulaire (11) au moyen de ladite grue (3) et de l'outil de redressement et de levage (2), faisant ainsi tourner la monopile (1) d'une orientation horizontale dans une orientation verticale,
d) abaisser la monopile (1) et placer la monopile (1) sur le lit marin au moyen de la grue (3), de préférence accompagnée par la retenue de la monopile (1) dans l'orientation verticale au moyen d'un support de monopile (4),
e) libérer l'outil de redressement et de levage (2) de la partie d'extrémité supérieure (11a) du corps de monopile tubulaire (11) de la monopile (1),
f) suspendre un dispositif d'entraînement de pile (5) au bloc de levage (31) de la grue (3),
g) positionner ledit dispositif d'entraînement de pile (5) suspendu sur la partie d'extrémité supérieure (11a) du corps de monopile tubulaire (11) de la monopile (1) au moyen de ladite grue (3),
h) actionner le dispositif d'entraînement de pile (5) et entraîner ainsi la monopile (1) dans le lit marin,
**caractérisé en ce que** :
le procédé comprend, après l'étape e) et avant l'étape f), l'étape consistant à raccorder l'outil de redressement et de levage (2) encore fixé au bloc de levage (31) de la grue (3) au dispositif d'entraînement de pile (5),
et **en ce qu'**à l'étape g), le dispositif d'entraînement de pile (5) est retenu par ledit outil de redressement et de levage (2),
et **en ce que**, facultativement, après l'étape g) et avant l'étape h), l'outil de redressement et de levage (2) est libéré du dispositif d'entraînement de pile (5) qui a été positionné sur la monopile (1).

2. Procédé selon la revendication 1, dans lequel, à l'étape b), l'outil de redressement et de levage (2) est raccordé à la partie d'extrémité supérieure (11a) du corps de monopile tubulaire (11) au moyen des éléments de serrage à friction mobiles (211) et pas par les éléments de verrouillage mobiles (212), lorsqu'ils sont présents,
lesdits éléments de serrage à friction mobile (211) mettant en prise par friction une surface interne (11c) et/ou une surface externe (11d) du corps de monopile tubulaire (11),
et dans lequel lesdits éléments de verrouillage mobiles (212), lorsqu'ils sont présents, dans leur position rétractée (212'), sur une vue de dessus dudit outil de redressement et de levage (2) s'étendent radialement dans le contour externe des éléments de serrage à friction mobiles (211),
et dans lequel au moins pendant les étapes b), c), d) et e), lesdits éléments de verrouillage mobiles (212), lorsqu'ils sont présents, restent dans leur position rétractée (212').

3. Procédé selon la revendication 1, dans lequel la partie d'extrémité supérieure (11a) du corps de monopile tubulaire (11) est prévu avec ladite bride radialement vers l'intérieur (11b), et dans lequel à l'étape b), l'outil de redressement et de levage (2) est raccordé à la partie d'extrémité supérieure (11a) du corps de monopile tubulaire (11) au moyen des éléments de verrouillage mobiles (212), et pas par les éléments de serrage à friction mobiles (211), lorsqu'ils sont présents,
lesdits éléments de verrouillage mobiles (212) se verrouillant sous la bride radialement vers l'intérieur (11b) du corps de monopile tubulaire (11),
et dans lequel au moins pendant les étapes b), c), d) et e), lesdits éléments de serrage à friction mobiles (211), lorsqu'ils sont présents, restent dans leur position rétractée (211').

4. Procédé selon l'une quelconque des revendications précédentes, dans lequel - à l'étape après l'étape e) et avant l'étape f) consistant à raccorder l'outil de redressement et de levage (2) toujours fixé au bloc de levage (31) de la grue (3) au dispositif d'entraînement de pile (5) - ledit raccordement est réalisé au moyen des éléments de serrage à friction mobiles (211) ou aux éléments de verrouillage mobiles (212) de l'outil de redressement et de levage (2) utilisé pour manipuler la monopile (1),
et dans lequel pendant l'étape g), le dispositif d'entraînement de pile est retenu au moyen des éléments de serrage à friction mobiles (211) ou des éléments de verrouillage mobiles (212) de l'outil de redressement et de levage (2) utilisé pour manipuler la monopile (1).

5. Procédé selon l'une quelconque des revendications précédentes, dans lequel le bâti (21) de l'outil de redressement et de levage (2) comprend en outre un ou plusieurs connecteurs de dispositif d'entraînement de pile (213) supplémentaires en plus de ou distincts de chacun dudit au moins l'un parmi les éléments de serrage à friction mobiles et des éléments de verrouillage mobiles,
et dans lequel - à l'étape consistant à raccorder l'outil de redressement et de levage (2) encore suspendu au bloc de levage (31) de la grue (3) au dispositif d'entraînement de pile (5) - ledit raccordement est réalisé au moyen d'un ou de plusieurs parmi des connecteurs de dispositif d'entraînement de pile supplémentaires (213),
dans lequel, de préférence, un diamètre de l'extrémité supérieure (5a) du dispositif d'entraînement de pile (5) est sensiblement inférieur à un diamètre de la partie d'extrémité supérieure (11a) du corps de monopile tubulaire (11) de la monopile (1), par exemple au moins deux fois plus petit.

6. Procédé selon la revendication 5, dans lequel lesdits un ou plusieurs connecteurs de dispositif d'entraînement de pile supplémentaires (213) sont mis en œuvre sous la forme d'un ou de plusieurs éléments de verrouillage de dispositif d'entraînement de pile et dans lequel - à l'étape consistant à raccorder l'outil de redressement et de levage (2) encore suspendu au bloc de levage (31) de la grue (3) au dispositif d'entraînement de pile (5) - ledit raccordement comprend l'étape consistant à verrouiller lesdits connecteurs de dispositif d'entraînement de pile supplémentaires (213) sur le dispositif d'entraînement de pile (5), par exemple au-dessous d'une ou de plusieurs saillies et/ou d'une bride au niveau d'une extrémité supérieure (5a) du dispositif d'entraînement de pile (5).

7. Procédé selon l'une quelconque des revendications précédentes, qui avant l'étape c), comprend en outre l'étape consistant à positionner la monopile (1) dans un support de pile (4) sur un navire d'installation (7) tout en étant dans une orientation horizontale, par exemple parallèle à un axe longitudinal du navire d'installation (7),
dans lequel ledit support de pile (4) se met en prise avec une circonférence de la monopile (1) au niveau de son côté inférieur (1a) pour supporter la monopile (1) afin de limiter le déplacement du côté inférieur (1a) de la monopile (1) dans une direction perpendiculaire à un axe longitudinal de la monopile (1),
et dans lequel le support de pile (4) se met en prise avec une extrémité inférieure (1b) de la monopile (1) afin de limiter le déplacement de la monopile (1) dans une direction parallèle à l'axe longitudinal de la monopile (1),
et après l'étape c) et avant l'étape d), comprend en outre l'étape consistant à dégager le support de pile (4) de l'extrémité inférieure (1b) de la monopile (1).

8. Procédé selon l'une quelconque des revendications précédentes, dans lequel une pièce de transition (6) est installée sur la monopile (1) qui a été entraînée dans le lit marin, et dans lequel le procédé comprend, après l'étape h), les étapes suivantes consistant à :
i) retirer le dispositif d'entraînement de pile (5) de la partie d'extrémité supérieure (11a) de la monopile (1) au moyen de la grue (3) et de l'outil de redressement et de levage (2),
j) libérer le dispositif d'entraînement de pile (5) de l'outil de redressement et de levage (2),
k) raccorder l'outil de redressement et de levage (2) encore suspendu au bloc de levage (31) de la grue (3) à la pièce de transition (6), par exemple, dans lequel l'outil de transition (6) est prévu au niveau de sa partie d'extrémité supérieure (6a) avec une bride radialement vers l'intérieur (6b) et dans lequel l'outil de redressement et de levage (2) est prévu avec lesdits éléments de verrouillage mobiles (212) et dans lequel les éléments de verrouillage mobiles (212) sont déplacés dans ladite position de verrouillage (212"),
l) lever ladite pièce de transition (6) au moyen de la grue (3) et de l'outil de redressement et de levage (2),
m) positionner ladite pièce de transition (6) suspendue sur la partie d'extrémité supérieure (11a) du corps de monopile tubulaire (11) de la monopile (1) au moyen de ladite grue (3) et de l'outil de redressement et de levage,
dans lequel, de préférence, à l'étape k), l'outil de redressement et de levage (2) est raccordé à la partie d'extrémité supérieure (6a) de la pièce de transition (6) au moyen des éléments de serrage à friction mobiles (211) et pas par les éléments de verrouillage mobiles (212), lorsqu'ils sont présents, lesdits éléments de serrage à friction mobiles (211) mettent en prise par verrouillage une surface interne et/ou une surface externe de la pièce de transition (6) et lesdits éléments de verrouillage mobiles (212), lorsqu'ils sont présents, dans leur position rétractée (212') sur une vue de dessus dudit outil de redressement et de levage (2) s'étendent radialement dans le contour externe des éléments de serrage à friction mobiles (211),
par exemple, dans lequel au moins pendant l'étape k), lesdits éléments de serrage à friction mobiles (211), lorsqu'ils sont présents, ne supportent pas verticalement la bride radialement vers l'intérieur (6b) de la pièce de transition (6), lorsqu'ils sont présents.

9. Procédé selon la revendication 8, dans lequel la partie d'extrémité supérieure (6a) de la pièce de transition (6) est prévue avec une bride radialement vers l'intérieur (6b), et dans lequel à l'étape k), l'outil de redressement et de levage (2) est raccordé à la partie d'extrémité supérieure (6a) de la pièce de transition (6) au moyen des éléments de verrouillage mobiles (212), et pas par les éléments de serrage à friction mobiles (211), lorsqu'ils sont présents,
lesdits éléments de verrouillage mobiles (212) se verrouillant au-dessous de la bride radialement vers l'intérieur (6b) de la pièce de transition (6).

10. Outil à double mode (2) pour l'installation d'une fondation d'une éolienne en mer, ladite fondation comprenant une monopile (1) qui est entraînée dans le lit marin, facultativement la fondation comprenant également une pièce de transition (6) à monter sur la monopile (1) après que ladite monopile (1) a été entraînée dans le lit marin,
ladite monopile (1) ayant un corps de monopile tubulaire (11) avec une partie d'extrémité supérieure (11a) qui est facultativement prévue avec une bride radialement vers l'intérieur (11b),
ledit outil à double mode (2) comprenant un bâti rigide (21),
ledit bâti rigide (21) étant prévu avec des éléments de cale mobiles (211) adaptés pour mettre en prise par friction une surface interne (11c) et/ou une surface externe (11d) du corps de monopile tubulaire (11), ainsi qu'un ou plusieurs actionneurs de serrage (211a) qui sont au moins adaptés pour déplacer les éléments de cale mobiles (211) d'une position rétractée (211') dans une position de serrage (211"), et
ledit bâti rigide (21) étant prévu avec un élément de fixation (214) adapté pour fixer l'outil à double mode (2) à un bloc de levage (31) d'une grue (3),
**caractérisé en ce que** :
ledit bâti rigide (21) est également prévu avec des éléments de verrouillage mobiles (212) adaptés pour se verrouiller sur la partie d'extrémité supérieure (11a) du corps de monopile tubulaire (11) et/ou sur la partie d'extrémité supérieure (6a) de la pièce de transition (6) et/ou sur un dispositif d'entraînement de pile (5), par exemple pour se verrouiller au-dessous d'une bride radialement vers l'intérieur, lorsqu'elle est présente, ainsi qu'un ou plusieurs actionneurs d'éléments de verrouillage mobiles (212a) adaptés pour déplacer les éléments de verrouillage mobiles (212) entre une position rétractée (212') par exemple dans lequel les éléments de verrouillage mobiles (212) peuvent passer à travers une ouverture (11e) définie par la bride radialement vers l'intérieur (11b) de la partie d'extrémité supérieure (11a) du corps de monopile tubulaire (11) lorsqu'elle est présente, et une position de verrouillage (212"), par exemple dans lequel les éléments de verrouillage mobiles (212) sont au-dessous de la bride radialement vers l'intérieur (11b),
et **en ce que** les éléments de cale mobiles (211) sont opérationnels indépendamment des éléments de verrouillage mobiles (212), afin de se raccorder à une monopile (1), un dispositif d'entraînement de pile (5) et/ou une pièce de transition (6) au moyen desdits éléments de cale mobiles (211) ou desdits éléments de verrouillage mobiles (212).

11. Outil (2) selon la revendication 10, dans lequel le bâti rigide (21) de l'outil (2) comprend en outre un ou plusieurs connecteurs de dispositif d'entraînement de pile supplémentaires (213) en plus de et distincts desdits éléments de cale mobiles (211) et des éléments de verrouillage mobiles (212) adaptés pour se verrouiller sur la partie d'extrémité supérieure (11a) du corps de monopile tubulaire (11) et/ou sur la partie d'extrémité supérieure (6a) de la pièce de transition (6).

12. Outil selon la revendication 11, lesdits un ou plusieurs des connecteurs de dispositif d'entraînement de pile supplémentaires (213) étant adaptés pour raccorder l'outil (2) à l'extrémité supérieure (5a) du dispositif d'entraînement de pile (5), ladite extrémité supérieure (5a) du dispositif d'entraînement de pile (5) ayant un diamètre qui est sensiblement inférieur à un diamètre de la partie d'extrémité supérieure (11a) du corps de monopile tubulaire (11) de la monopile (1) et/ou de la pièce de transition (6).

13. Outil selon l'une quelconque des revendications 10 à 12, dans lequel lesdits éléments de serrage à friction mobiles (211) dans leur position rétractée (211'), sur une vue de dessus dudit outil (2), s'étendent radialement dans le contour externe des éléments de verrouillage mobiles (212).

14. Outil selon l'une quelconque des revendications 10 à 13, dans lequel le bâti rigide (21) comprend deux éléments de barre d'écartement pivotants (215) diamétralement opposés,
lesdits éléments de barre d'écartement pivotants (215) au niveau de leur extrémité radialement proximale (215a) étant raccordés de manière pivotante au bâti rigide (21) ainsi que deux actionneurs de barre d'écartement (215c) qui sont au moins adaptés pour déplacer les deux éléments de barre d'écartement pivotants (215) de leur position rétractée (215') dans la position étendue (215"),
lesdits éléments de barre d'écartement pivotants (215) chacun à leur extrémité radialement à distance (215b) étant prévus avec un connecteur de barre d'écartement (215d),
dans lequel chaque connecteur de barre d'écartement (215d) dans la position étendue (215") des éléments de barre d'écartement pivotants (215) sur une vue de dessus dudit outil (2) est dans une position radiale à l'extérieur du contour externe des un ou plusieurs éléments de serrage à friction mobiles (211) et/ou le contour externe des uns ou plusieurs éléments de verrouillage mobiles (212).

15. Outil selon l'une quelconque des revendications 10 à 14, dans lequel les éléments de barre d'écartement pivotants (215) sont au niveau de leur extrémité radialement proximale (215a) raccordés de manière pivotante à l'élément de fixation (214).
